# EUROPEAN PATENT APPLICATION

(11) **EP 4 804 714 A1**
(43) Date of publication of application: **09.09.2026**
(21) Application number: 23957166.4
(22) Date of filing: 31.10.2023
(51) Int. Cl.: H04W 76/11

(54) **COOPERATIVE TRANSMISSION METHOD UNDER MULTI-AP MLD ARCHITECTURE**

(71) Applicant: Shenzhen TCL New Technology Co., Ltd., Shenzhen, Guangdong 518052 (CN)
(72) Inventor: ZHOU, Pei, Shenzhen, Guangdong 518052 (CN)
(74) Representative: Herrero & Asociados, S.L.
(86) International application number: PCT/CN2023/128761
(87) International publication number: WO 2025/091289

(57) **Abstract**

The present application provides a wireless communication method for a non-access point multi-link device (non-AP MLD), comprising: transmitting an association request frame to a non-collocated AP MLD, wherein the association request frame is used for requesting to associate at least one AP MLD among a plurality of AP MLDs included in the non-collocated AP MLD with the non-AP MLD; so that the non-AP MLD is associated with the non-collocated AP MLD; and receiving a first association response frame from the non-collocated AP MLD, wherein the first association response frame is sent by the non-collocated AP MLD on the basis of the association request frame.

## Description

### TECHNICAL FIELD

The present disclosure relates to the field of communication systems, and more specifically, to a wireless communication method for a non-access point multi-link device (non-AP MLD), a wireless communication method for a non-collocated access point multi-link device (non-collocated AP MLD) and a chip and a computer-readable storage medium related thereto, a wireless communication method for a non-access point multi-link device (non-AP MLD), and a wireless communication method for a virtual access point multi-link device (virtual AP MLD) and a chip and a computer-readable storage medium related there to.

### BACKGROUND

In the related art, multiple affiliated access points (APs) of an Access Point (AP) Multi-Link Device (MLD) are typically collocated, which makes it impossible for a non-Access Point (non-AP) multi-link device (non-AP MLD) to establish multiple links with different AP MLDs.

Furthermore, according to the 802.11be standard, a non-AP MLD can only establish association with one of M collocated AP MLDs. It can be seen that, the related art lacks the technical concepts and frameworks for a non-AP MLD to perform multi-link communication in a simple and efficient manner.

It should be noted that the content described in this section does not constitute or is not to be regarded as an admission of any prior art.

### SUMMARY

To overcome at least the above technical problems, the present disclosure provides a wireless communication method for a non-access point multi-link device (non-AP MLD), a wireless communication method for a non-collocated access point multi-link device (non-collocated AP MLD) and a chip and a computer-readable storage medium related thereto, a wireless communication method for a non-access point multi-link device (non-AP MLD), and a wireless communication method for a virtual access point multi-link device (virtual AP MLD) and a chip and a computer-readable storage medium related thereto. Thereby, multiple solutions for implementing efficient multi-AP MLD cooperative transmission are provided, which not only enable a non-AP MLD to perform multi-link communication in a simple and efficient manner and thus increase throughput, but also improve the efficiency and reliability of wireless communication.

According to one aspect of the present disclosure, a wireless communication method for a non-access point multi-link device (non-AP MLD) is provided, including: transmitting an association request frame to a non-collocated access point multi-link device (non-collocated AP MLD), where the association request frame is used for requesting at least one access point multi-link device (AP MLD) of a plurality of AP MLDs included in the non-collocated AP MLD to associate with the non-AP MLD, so that the non-AP MLD is associated with the non-collocated AP MLD; and receiving a first association response frame from the non-collocated AP MLD, where the first association response frame is sent by the non-collocated AP MLD based on the association request frame.

According to another aspect of the present disclosure, a wireless communication method for a non-collocated access point multi-link device (non-collocated AP MLD) is provided, including: receiving an association request frame from a non-access point multi-link device (non-AP MLD). The association request frame is used by the non-AP MLD to request at least one access point multi-link device (AP MLD) of a plurality of AP MLDs included in the non-collocated AP MLD to associate with the non-AP MLD, so that the non-AP MLD is associated with the non-collocated AP MLD; and sending a first association response frame to the non-AP MLD based on the association request frame.

According to another aspect of the present disclosure, a wireless communication method for a non-access point multi-link device (non-AP MLD) is provided, including: transmitting an association request frame to a virtual access point multi-link device (virtual AP MLD), where the virtual AP MLD includes a plurality of AP MLDs, each AP MLD includes a plurality of access points (APs), and one or more APs operating in a same frequency band among all the APs are unified by the virtual AP MLD into a unique affiliated AP, where the association request frame is used for the non-AP MLD to make an association request to the virtual AP MLD, so that the non-AP MLD is associated with the virtual AP MLD; and receiving an association response frame from the virtual AP MLD, where the association response frame is sent by the virtual AP MLD based on the association request frame.

According to another aspect of the present disclosure, a wireless communication method for a virtual access point multi-link device (virtual AP MLD) is provided, including: receiving an association request frame from a non-access point multi-link device (non-AP MLD), where the virtual AP MLD includes a plurality of AP MLDs, each AP MLD includes a plurality of access points (APs), and one or more APs operating in a same frequency band among all the APs are unified by the virtual AP MLD into a unique affiliated AP, where the association request frame is used for the non-AP MLD to make an association request to the virtual AP MLD, so that the non-AP MLD is associated with the virtual AP MLD; and sending an association response frame to the non-AP MLD based on the association request frame.

According to another aspect of the present disclosure, a chip is provided, including: a processor, which is configured to call and run a computer program stored in a memory, to cause a device in which the chip is installed to perform the method of the embodiments of any aspect of the present disclosure.

According to another aspect of the present disclosure, a computer-readable storage medium is provided, in which a computer program is stored, where the computer program causes a computer to perform the method of the embodiments of any aspect of the present disclosure.

According to another aspect of the present disclosure, a computer program product is provided, including a computer program, where the computer program causes a computer to perform the method of the embodiments of any aspect of the present disclosure.

### BRIEF DESCRIPTION OF THE DRAWINGS

In order to clearly explain the technical solutions in the embodiments of the present disclosure, the drawings used in the description of the embodiments will be briefly described below. Obviously, the drawings in the following description are merely some embodiments of the present disclosure. For those of ordinary skill in the art, other drawings may also be obtained based on these drawings without any creative work.
FIG. 1 illustrates a diagram of establishing a multi-link between multiple collocated AP MLDs and a non-AP MLD under the non-collocated AP MLD architecture according to some embodiments of the present disclosure.
FIG. 2 illustrates a structure of an exemplary TID-to-Link mapping element according to some embodiments of the present disclosure.
FIG. 3A illustrates a format of a TID-to-Link mapping control field in an exemplary TID-to-Link mapping element according to some embodiments of the present disclosure.
FIG. 3B illustrates a format of an exemplary modified TID-to-Link mapping control field according to some embodiments of the present disclosure.
FIG. 4 illustrates a diagram of a timing relationship for physical layer protocol data unit (PPDU) end time alignment according to some embodiments of the present disclosure.
FIG. 5 illustrates a diagram of AP-triggered PPDU end time alignment according to some embodiments of the present disclosure.
FIG. 6 illustrates a diagram of STA-based SRS-controlled PPDU end time alignment according to some embodiments of the present disclosure.
FIG. 7 illustrates a format of a control information subfield of an exemplary SRS control field according to some embodiments of the present disclosure.
FIG. 8 illustrates a diagram of PPDU end time alignment in a case where a link loses synchronization according to some embodiments of the present disclosure.
FIG. 9 illustrates a format of a control information subfield of an exemplary AAR control field according to some embodiments of the present disclosure.
FIG. 10 illustrates a diagram of channel state information reporting between a non-AP MLD and a non-collocated AP MLD according to some embodiments of the present disclosure.
FIG. 11 illustrates a diagram of data transmission and acknowledgement between a non-AP MLD and a non-collocated AP MLD according to some embodiments of the present disclosure.
FIG. 12A illustrates a format of an exemplary block acknowledgement frame according to some embodiments of the present disclosure.
FIG. 12B illustrates a format of a BA control field of an exemplary block acknowledgement frame according to some embodiments of the present disclosure.
FIG. 12C illustrates a definition of a BA information field of an exemplary multi-link block acknowledgement frame according to some embodiments of the present disclosure.
FIG. 13 illustrates a diagram of a non-AP MLD performing seamless roaming among multiple collocated AP MLDs under a non-collocated AP MLD according to some embodiments of the present disclosure.
FIG. 14 illustrates a schematic diagram of a virtual AP MLD architecture according to some embodiments of the present disclosure.
FIG. 15 illustrates a format of an exemplary multi-link element under the virtual AP MLD framework according to some embodiments of the present disclosure.
FIG. 16 illustrates a format of a per-STA profile sub-element of an exemplary basic multi-link element according to some embodiments of the present disclosure.
FIG. 17 illustrates a format of an exemplary null data packet announcement (NDPA) frame according to some embodiments of the present disclosure.
FIG. 18 illustrates a flowchart of a wireless communication method for a non-access point multi-link device (non-AP MLD) according to some embodiments of the present disclosure.
FIG. 19 illustrates a flowchart of a wireless communication method for a non-collocated access point multi-link device (non-collocated AP MLD) according to some embodiments of the present disclosure.
FIG. 20 illustrates a flowchart of a wireless communication method for a non-access point multi-link device (non-AP MLD) according to some embodiments of the present disclosure.
FIG. 21 illustrates a flowchart of a wireless communication method for a virtual access point multi-link device (AP MLD) according to some embodiments of the present disclosure.
FIG. 22 illustrates a block diagram of an exemplary system for wireless communication according to an embodiment of the present disclosure.

### DETAILED DESCRIPTION

Embodiments of the present disclosure are described in detail below with reference to the drawings, describing technical matters, structural features, objectives to be achieved, and effects. Specifically, the terminology used in the embodiments of the present disclosure is for the purpose of describing particular embodiments only and is not intended to be limiting of the present disclosure.

In the present disclosure, "A or B" may mean "only A", "only B", or "both A and B".

In other words, in the present disclosure, "A or B" can be interpreted as "A and/or B". For example, in the present disclosure, "A, B, or C" may mean "only A", "only B", "only C", or "any combination of A, B, and C".

The slash (/) or comma used in the present disclosure may mean "and/or". For example, "A/B" may mean "A and/or B". Therefore, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" can be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

Furthermore, the terms "first" and "second" are used for descriptive purposes only and cannot be understood as indicating or implying relative importance or implicitly indicating the number of technical features indicated, nor can they be understood as referring to a sequence in space or time. Thus, a feature defined by "first" or "second" may explicitly or implicitly include one or more of the features. In the description of this application, "a plurality of" means two or more, unless otherwise explicitly and specifically defined.

In the related art, multiple affiliated APs of an AP MLD are typically collocated, which makes it impossible for a non-AP MLD to establish multiple links with different AP MLDs.

Furthermore, according to the 802.11be standard, a non-AP MLD can only establish an association with one of M collocated AP MLDs.

Thus, based on research into the related art, it is known that there is an urgent need to design a novel non-collocated AP MLD architecture that is compatible with the 802.11be AP MLD architecture, and in particular, that can overcome the deficiencies in the related art.

Therefore, the present disclosure aims to propose a solution, that is, to design a novel non-collocated AP MLD architecture that is compatible with the 802.11be AP MLD architecture. As an example and not a limitation, this architecture can also address multiple technical difficulties and problems, such as how a non-AP MLD performs multi-link transmission under the non-collocated AP MLD framework, how to map services to multiple links, how to avoid non-simultaneous transmission and reception (NSTR) interference during joint multi-link transmission, and how a non-AP MLD performs seamless roaming under the non-collocated AP MLD framework. The aim is to achieve more efficient wireless data transmission through this novel architectural design.

### Establishing a multi-link between a non-AP MLD and multiple collocated AP MLDs under a non-collocated AP MLD:

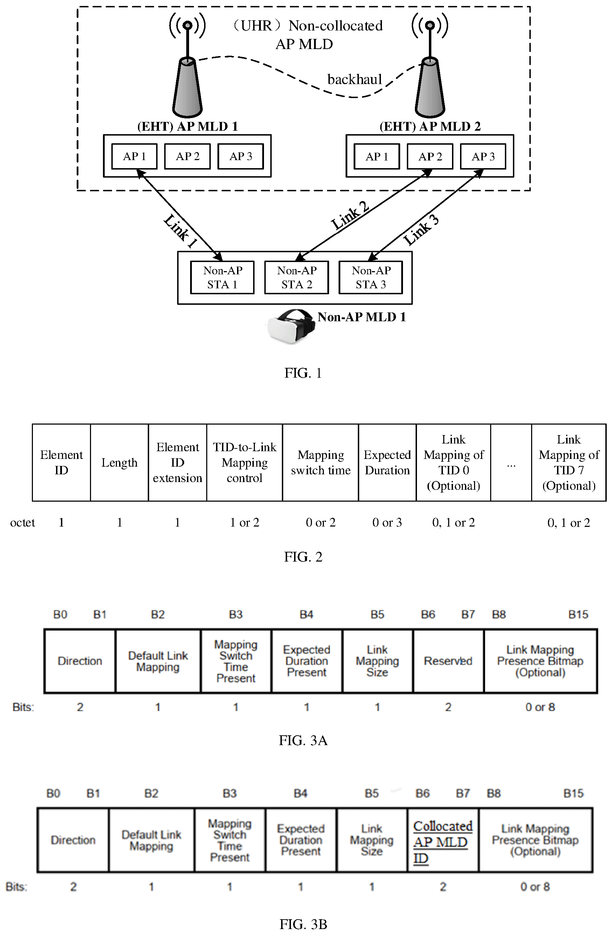

FIG. 1 illustrates a diagram of establishing a multi-link between a non-AP MLD and multiple collocated AP MLDs under a non-collocated AP MLD architecture according to some embodiments of the present disclosure.

According to some embodiments of the present disclosure, a new 802.11be-compliant non-collocated AP MLD architecture is provided. As shown in the figure, in some examples, the non-collocated AP MLD may be an Ultra-High Reliability (UHR) non-collocated AP MLD. As an example and not a limitation, the (UHR) non-collocated AP MLD architecture may include two collocated AP MLDs, namely AP MLD 1 and AP MLD 2. In some examples, any of the AP MLDs in the (UHR) non-collocated AP MLD architecture may be an Extremely High Throughput (EHT) AP MLD.

It should be noted that although FIG. 1 illustrates a non-collocated AP MLD including two collocated AP MLDs (i.e., two collocated AP MLDs are present in one non-collocated AP MLD architecture), this is for illustrative purposes only. Throughout the present disclosure and as will be readily appreciated by those skilled in the art, any suitable number of collocated AP MLDs may be present or included in a non-collocated AP MLD architecture according to actual scenarios and/or needs, and the present disclosure does not impose any limitation in this regard.

Similarly, although FIG. 1 illustrates that the two collocated AP MLDs (i.e., AP MLD 1 and AP MLD 2) each include three affiliated APs (e.g., AP1 to AP3), this is also for illustrative purposes only. Throughout the present disclosure and as will be readily appreciated by those skilled in the art, different collocated AP MLDs may include different or the same number of affiliated APs according to actual scenarios and/or needs, and the present disclosure does not impose any limitation in this regard.

In addition, for the non-AP MLD, although FIG. 1 illustrates that non-AP MLD 1 includes three non-AP STAs, this is also for illustrative purposes only. Throughout the present disclosure and as will be readily appreciated by those skilled in the art, a non-AP MLD may include any suitable number of non-AP STAs according to actual scenarios and/or needs, and the present disclosure does not impose any limitation in this regard.

As shown in the figure, non-AP MLD 1 can successfully associate with the (UHR) non-collocated AP MLD by sending an association request (e.g., an association request frame or a request message) to any of the collocated AP MLDs.

It can be understood that when a device (e.g., non-AP MLD 1 shown in FIG. 1) is at the edge of a Basic Service Set (BSS), the following effects may occur:
· Weak signal: Due to a large distance from the AP or the presence of obstacles, the signal strength received by the device may be weak, which may lead to a decrease in signal quality and affect the reliability and rate of data transmission.
· Reduced transmission rate: Due to a weak signal or increased interference, communication between the device and the AP may be limited. This may lead to a reduced transmission rate and increased latency, affecting the quality of real-time applications (such as video streaming or voice calls).
· Unstable connection: When the device is at the edge of the BSS, the connection may become unstable due to a weak signal or interference, which may lead to connection interruptions, packet loss, or frequent reconnections, affecting user experience and application performance.
· Roaming latency: When the device moves from the edge of one BSS to another, roaming may experience latency, which may lead to connection interruptions or data transmission interruptions. This is especially noticeable when mobile devices are engaged in real-time communication.

Further, when non-AP MLD 1 is associating with the (UHR) non-collocated AP MLD, non-AP MLD 1 may also make a multi-link establishment request when sending the association request to the non-collocated AP MLD (e.g., via the sent association request). For example, as shown in FIG. 1, non-AP MLD 1 may establish three links, Link 1, Link 2, and Link 3, with AP MLD 1 and AP MLD 2. Specifically, Link 1 may be established between non-AP STA 1 of non-AP MLD 1 and affiliated AP 1 of (EHT) AP MLD 1 within the (UHR) non-collocated AP MLD; Link 2 may be established between non-AP STA 2 of non-AP MLD 1 and affiliated AP 2 of (EHT) AP MLD 2 within the (UHR) non-collocated AP MLD; and Link 3 may be established between non-AP STA 3 of non-AP MLD 1 and affiliated AP 3 of (EHT) AP MLD 2 within the (UHR) non-collocated AP MLD. In this way, non-AP MLD 1, which is at the edge of the BSS or is mobile, can achieve more stable uplink and downlink data transmission.

This new non-collocated AP MLD architecture can achieve more efficient and stable data transmission and provide a better user experience, especially for devices at the edge of a BSS or in motion. In addition, this architecture also provides more flexible options for multi-link establishment to meet the needs of different scenarios. For example, non-AP MLD 1 can choose to establish a link with AP MLD 1 or AP MLD 2 based on network load and signal strength to achieve optimal transmission performance.

It should be appreciated that the example described above, where the non-collocated AP MLD includes two collocated AP MLDs, is for illustrative purposes only, and the present disclosure is not intended to be limiting in this regard. For example, the proposed non-collocated AP MLD may include any suitable number of collocated AP MLDs; a non-AP MLD may establish a multi-link with any suitable number of collocated AP MLDs within the non-collocated AP MLD (and thus any suitable affiliated APs included in each of these collocated AP MLDs); each collocated AP MLD may include a different number of affiliated APs, and so on. After reading the above description, those skilled in the art can easily conceive of other suitable additions, deletions, modifications, and variations, all of which fall within the scope of the present disclosure.

Based on research of the prior art, for a device (e.g., non-AP MLD 1) to establish a multi-link with multiple collocated AP MLDs within a non-collocated AP MLD when requesting association with the non-collocated AP MLD, the device needs to send an association request (e.g., an association request frame) to the non-collocated AP MLD, and the non-collocated AP MLD needs to reply with an association response (e.g., an association response frame).

As an example, when making a multi-link establishment request, non-AP MLD 1 can initiate a multi-link establishment request to the non-collocated AP MLD through an association request frame. In this embodiment, the association request frame contains multiple Basic Multi-Link elements, as shown in Table 1 below. In an example, the multi-link element corresponds to one (EHT) AP MLD. That is, the MLD MAC address subfield of the Common Info field of the basic multi-link element can be used to indicate a MAC address of different AP MLDs.

When non-AP MLD 1 requests to establish a link with the non-collocated AP MLD, if the link is operated by AP MLD 1 (e.g., Link 1 in FIG. 1), it can be indicated by the basic multi-link element corresponding to AP MLD 1 in the association request frame (e.g., the (Basic) Multi-Link element 1 corresponding to sequence number x). Similarly, when non-AP MLD 1 requests to establish a link with the non-collocated AP MLD, if the link is operated by AP MLD 2 (e.g., Link 2 and Link 3 in FIG. 1), it can be indicated by the basic multi-link element corresponding to AP MLD 2 in the association request frame (e.g., the (Basic) Multi-Link element 2 corresponding to sequence number x+1). The specific indication method can be consistent with the 802.11be standard. In this way, non-AP MLD 1 can initiate a multi-link establishment request to the non-collocated AP MLD and explicitly indicate the operating AP MLD for the required link, so as to achieve more efficient multi-link communication. The design of this indication method is consistent with the 802.11be standard, ensuring normal communication and collaboration in a multi-link environment.

**Table 1**

| Sequence Number | Information | Remarks |
|---|---|---|
| 1 | Capability Information | ... |
| ... | ... | ... |
| x | (Basic) Multi-Link (1) | Corresponding to AP MLD 1 |
| x+1 | (Basic) Multi-Link (2) | Corresponding to AP MLD 2 |
| ... | ... | ... |
| x+M-1 | (Basic) Multi-Link (M) | Corresponding to AP MLD M |

As can be seen, in the association request frame, the non-AP MLD can carry multiple multi-link elements (e.g., (Basic) Multi-Link element 1 to (Basic) Multi-Link element M in Table 1 above), where the number of (basic) multi-link elements is related to the number of collocated AP MLDs. The collocated AP MLDs corresponding to these (basic) multi-link elements belong to the same non-collocated AP MLD. This structural design of the association request frame allows the non-AP MLD to initiate multi-link establishment requests to multiple collocated AP MLDs at once, thereby improving the efficiency of establishing a multi-link.

In addition, the Link Info field of the multiple (basic) multi-link elements in the association request frame can also carry a Received Signal Strength Indication (RSSI) report obtained by the non-AP MLD by measuring frames sent by the corresponding affiliated APs. As shown in Table 2 below, the Link Info field of the (basic) multi-link element can carry various Optional Subelement IDs. In one or more embodiments of the present disclosure, one value from Subelement ID 1-220, 222-253, or 255 (e.g., Subelement ID = 1) may be defined to indicate that the subelement is an RSSI report, used to carry the strength of the signal received by the non-AP MLD. For example, the length of the RSSI report can be 8 bits, and thus its value range can be from -128 dBm to 127 dBm to represent the signal strength. The present disclosure does not impose any limitation on the length of the RSSI report.

**Table 2**

| Subelement ID | Name | Extensibility |
|---|---|---|
| 0 | Per-STA Profile | Yes |
| 1 | RSSI Report | Yes |
| 2-220 | Reserved | |
| 221 | Vendor-specific | Vendor-defined |
| 222-253 | Reserved | |
| 254 | Fragment | No |
| 255 | Reserved | |

By carrying multiple basic multi-link elements in the association request frame and using the optional subelement ID in their Link Info fields to indicate the RSSI report, the non-AP MLD can more comprehensively describe the link quality with the affiliated APs.

It can be understood that the non-AP MLD reports the RSSI of multiple (though possibly not all) affiliated APs within the non-collocated AP MLD to the non-collocated AP MLD through the association request frame. These RSSI reports can assist the non-collocated AP MLD in making multi-link establishment decisions. By transmitting the RSSI information of the affiliated APs in the association request frame, the non-AP MLD and the non-collocated AP MLD can collaboratively make multi-link establishment decisions to optimize the performance and data transmission efficiency of the wireless network. Considering the importance of RSSI for link quality, the non-collocated AP MLD can avoid resource waste and a reduction in network capacity by rejecting potentially invalid links. This mechanism can provide better link management and selection and ensures normal communication and collaboration in a multi-link environment.

For example, when the RSSI value of a certain link is too low, even if such a link is established, effective data transmission cannot be performed subsequently (e.g., leading to a reduced data transmission rate, increased packet loss rate, reduced coverage range, increased power consumption and interference, and reduced network capacity). Therefore, in the association response (e.g., an association response frame), the non-collocated AP MLD can refuse to establish or maintain such a link.

Continuing with the example shown in FIG. 1, a non-collocated AP MLD can reply to a request for association and/or multi-link establishment from non-AP MLD1, by sending an association response frame with the result to non-AP MLD 1.When the non-AP MLD carries multiple Basic Multi-Link elements in the association request frame, the non-collocated AP MLD also carries multiple corresponding Basic Multi-Link elements in the association response frame, as shown in Table 3 below.

**Table 3**

| Sequence Number | Information | Remarks |
|---|---|---|
| 1 | Capability Information | ... |
| ... | ... | ... |
| x | (Basic) Multi-Link (1) | Corresponds to AP MLD 1 |
| x+1 | (Basic) Multi-Link (2) | Corresponds to AP MLD 2 |
| ... | | ... |
| x+M-1 | (Basic) Multi-Link (M) | Corresponds to AP MLD M |

In the example above, the non-collocated AP MLD uses an association response frame to communicate the result of the multi-link establishment request to non-AP MLD 1. This reply can contain multiple Basic Multi-Link elements for a single request. When the non-AP MLD carries multiple Basic Multi-Link elements in the request, the non-collocated AP MLD includes these multiple Basic Multi-Link elements in the reply in a corresponding manner.

Based on a study of the related art, to ensure proper collaboration and communication between a non-AP MLD and a non-collocated AP MLD, it is necessary to modify the corresponding multiple Basic Multi-Link elements included in the association response frame sent from the non-collocated AP MLD to the non-AP MLD. For example, such modifications may include the following aspects:
Aspect (1): If the non-collocated AP MLD approves the non-AP MLD's request to establish a link with a specific collocated AP MLD (i.e., approves a link to be carried on a specific collocated AP MLD, for example, a link carried on AP MLD 1, such as Link 1), the Basic Multi-Link element corresponding to that AP MLD can be carried in the association response frame. For example, in the Basic Multi-Link element corresponding to AP MLD 1 (e.g., the element with sequence number x), the MLD MAC Address subfield of its Common Info field indicates the MAC address of AP MLD 1. In addition, the Status Code field within the Per-STA Profile subelement of the Basic Multi-Link element can be set to SUCCESS.
Aspect (2): If the non-collocated AP MLD rejects the request to establish a link on a specific collocated AP MLD, the Basic Multi-Link element corresponding to that AP MLD can be carried in the association response frame. In addition, the Status Code field within the Per-STA Profile subelement of the Basic Multi-Link element can be set to DENIED_LINK_ON_WHICH_THE_(Re)ASSOCIATION_REQUEST_FRAME_IS_TRANSMITTED_NOT_ACC EPTED.

Such a design enables the non-collocated AP MLD to effectively respond to and process multi-link establishment requests initiated by the non-AP MLD. By carrying multiple Basic Multi-Link elements in the response frame, a detailed and comprehensive reply to the multi-link request can be provided, thereby facilitating the accurate establishment of multi-link communication and ensuring proper collaboration and communication between the non-AP MLD and the non-collocated AP MLD.

In an example, if the non-collocated AP MLD approves the establishment of a multi-link with the non-AP MLD on different AP MLDs, the different links can be distinguished by a tuple such as <MLD MAC Address, Link ID> or <Collocated AP MLD ID, Link ID>. Here, the Collocated AP MLD ID is a distinct (e.g., unique) identifier uniformly assigned by the non-collocated AP MLD (or its Upper MAC) to different (collocated) AP MLDs. In an example, this identifier can be carried in a Beacon frame, a Probe Response frame, and/or a Multi-Link Probe Response frame sent by the non-collocated AP MLD (e.g., by an affiliated AP of one of its collocated AP MLDs), allowing the non-AP MLD to distinguish between different (collocated) AP MLDs upon receiving these frames.

It is to be understood that a person skilled in the art may use any suitable frame or message as needed to carry the distinct identifiers assigned by the non-collocated AP MLD to different links, and the present disclosure imposes no limitations in this regard.

Some exemplary embodiments of the present disclosure are provided below from the perspective of the non-AP MLD. It is to be understood that these embodiments are provided for illustrative purposes only. A person skilled in the art, under the description and teachings of the present disclosure, can conceive of any suitable modifications, additions, deletions, variations, and/or combinations for these embodiments to readily obtain equivalent implementations thereof.

According to some embodiments of the present disclosure, a wireless communication method for a non-access point multi-link device (non-AP MLD) is provided. The method may include transmitting an association request frame to a non-collocated access point multi-link device (non-collocated AP MLD). The association request frame may be used to request an association between the non-AP MLD and at least one access point multi-link device (AP MLD) among a plurality of AP MLDs comprised in the non-collocated AP MLD, thereby associating the non-AP MLD with the non-collocated AP MLD. The method may also include receiving a first association response frame from the non-collocated AP MLD, where the first association response frame may be sent by the non-collocated AP MLD in response to the association request frame. Thus, if the non-AP MLD successfully requests association with any AP MLD within the non-collocated AP MLD, it can be associated with the non-collocated AP MLD. This facilitates flexible association of the non-AP MLD with other AP MLDs within the non-collocated AP MLD for subsequent communication.

It should be noted that the non-AP MLD being associated with the non-collocated AP MLD can mean that the non-AP MLD is associated with the entire non-collocated AP MLD. This allows the non-AP MLD to subsequently request link establishment with any AP MLD under the non-collocated AP MLD and perform data transmission after the links are established. This eliminates the redundant operations and signaling overhead of the non-AP MLD having to separately request link establishment with different AP MLDs, thereby effectively improving wireless communication efficiency.

As can be seen from the background section of the present disclosure, an existing non-AP MLD can only associate with a specific collocated AP MLD among M collocated AP MLDs to perform data transmission. That is, the related art has not yet enabled an association between a non-AP MLD and different AP MLDs that would allow the non-AP MLD to subsequently establish multiple links with the associated AP MLDs and perform data transmission after the links are established.

In short, in the related art, a non-AP MLD can only associate with a single AP MLD, establish links with it, and then perform data transmission after the links are established.

Thus, the technical challenges addressed by the present disclosure include at least: how to facilitate communication between a non-AP MLD device and multiple collocated AP MLD devices. For example, this facilitation is beneficial for subsequent link establishment (e.g., multi-link establishment) between the non-AP MLD device and multiple AP MLD devices, and for data communication after the links are established.

According to some embodiments of the present disclosure, a non-AP MLD can associate with at least one AP MLD by sending an association request to that at least one AP MLD within the non-collocated AP MLD, and can subsequently establish links and perform data communication with it. Furthermore, by associating with at least one AP MLD, the non-AP MLD device also becomes associated with the non-collocated AP MLD that includes these AP MLDs (e.g., the entity responsible for managing and controlling the MAC addresses of these AP MLDs). In this way, the non-AP MLD is thereby also associated with other AP MLDs to which it did not send an association request. Correspondingly, the non-AP MLD can subsequently establish a multi-link with any number of the associated AP MLDs. This avoids adverse effects such as delays, signaling overhead, and forced communication interruptions due to potential rejection of additional requests. Such effects would otherwise occur when the non-AP MLD needs to establish new links, for instance, when roaming, switching from a link with poor conditions, or in other situations requiring additional link establishment requests. It should be noted that the present disclosure also aims to address other technical challenges, as described below with reference to the accompanying drawings and various exemplary embodiments and examples.

According to some embodiments of the present disclosure, the non-AP MLD being associated with the non-collocated AP MLD may include: the non-AP MLD establishing a multi-link with at least one of the plurality of AP MLDs. The establishment of the multi-link enables a non-AP MLD at the edge of a Basic Service Set (BSS) or in motion to obtain more stable uplink and downlink transmission rates, ensuring communication efficiency and reliability.

According to some embodiments of the present disclosure, the association request frame may include one or more Basic Multi-Link elements, each corresponding to one of the one or more AP MLDs. Via the association request frame, the non-AP MLD requests to establish a multi-link with the one or more AP MLDs. Each Basic Multi-Link element may indicate a medium access control (MAC) address of one of the AP MLDs. Thus, the correspondence between the Basic Multi-Link element and the AP MLD (and its MAC address) ensures the correctness and stability of multi-link communication.

According to some embodiments of the present disclosure, a first sub-element in the Basic Multi-Link element may contain a received signal strength indication (RSSI). The RSSI may represent the strength of a signal sent by an AP MLD and received by the non-AP MLD on a link operated by that AP MLD. This assists the non-collocated AP MLD in making efficient decisions for multi-link establishment. For example, if the RSSI on certain links is too low, these links cannot be used for data transmission even if established. Therefore, the non-collocated AP MLD can refuse to establish such links (e.g., in the association response frame), thereby achieving a more rational allocation and use of wireless communication resources.

According to some embodiments of the present disclosure, the method may also include receiving a first association response frame from the non-collocated AP MLD. The first association response frame may include one or more Basic Multi-Link elements, which correspond one-to-one with the Basic Multi-Link elements included in the association request frame. A second sub-element of each Basic Multi-Link element in the first association response frame may indicate whether the establishment of a link with the corresponding AP MLD is permitted. This allows the non-AP MLD to obtain simple information from the non-collocated AP MLD about whether the requested link establishments are granted, thereby saving signaling overhead.

According to some embodiments of the present disclosure, the second sub-element is a Per-STA Profile subelement.

According to some embodiments of the present disclosure, the method may also include receiving a second frame, which is different from the first association response frame, from the non-collocated AP MLD. The second frame carries identifiers corresponding to the one or more AP MLDs. Thus, when the non-collocated AP MLD permits the multi-link establishment with the non-AP MLD that is operated by different AP MLDs, this enables the non-AP MLD to distinguish between these different AP MLDs, ensuring the correctness and stability of multi-link communication.

Some exemplary embodiments of the present disclosure are provided below from the perspective of the non-collocated AP MLD. It is to be understood that these embodiments are provided for illustrative purposes only. A person skilled in the art, under the description and teachings of the present disclosure, can conceive of any suitable modifications, additions, deletions, variations, and/or combinations for these embodiments to readily obtain equivalent implementations thereof.

According to some embodiments of the present disclosure, a wireless communication method for a non-collocated access point multi-link device (non-collocated AP MLD) is provided. The method may include: receiving an association request frame from a non-access point multi-link device (non-AP MLD). The association request frame may be used by the non-AP MLD to request association with at least one access point multi-link device (AP MLD) among a plurality of AP MLDs included in the non-collocated AP MLD, thereby associating the non-AP MLD with the non-collocated AP MLD. The method may also include: transmitting a first association response frame to the non-AP MLD based on the association request frame. Thus, if the non-AP MLD successfully requests association with any AP MLD in the non-collocated AP MLD, the non-AP MLD can be associated with the non-collocated AP MLD, which facilitates flexible association of the non-AP MLD with other AP MLDs in the non-collocated AP MLD and subsequent communication therewith.

It should be noted that the non-AP MLD being associated with the non-collocated AP MLD can mean that the non-AP MLD is associated with the entire non-collocated AP MLD. This allows the non-AP MLD to request to establish a link with any AP MLD within the non-collocated AP MLD and subsequently perform data transmission after the link is established. This eliminates the redundant operations and signaling overhead of the non-AP MLD having to separately request to establish links with different AP MLDs, thereby effectively improving wireless communication efficiency.

According to some embodiments of the present disclosure, the non-AP MLD being associated with the non-collocated AP MLD may include: at least one AP MLD of the plurality of AP MLDs establishing a multi-link with the non-AP MLD. Thus, the establishment of the multi-link enables a non-AP MLD at the edge of a Basic Service Set (BSS) or in motion to obtain more stable uplink and downlink transmission rates, ensuring communication efficiency and reliability.

According to some embodiments of the present disclosure, the association request frame may include one or more basic multi-link elements corresponding to one or more AP MLDs in a one-to-one manner. The non-AP MLD requests, via the association request frame, to establish a multi-link with the one or more AP MLDs, and a basic multi-link element (for example, each basic multi-link element included in the association request frame) may indicate a Medium Access Control (MAC) address of one AP MLD of the one or more AP MLDs. Thus, the correspondence between the basic multi-link element and the AP MLD (and its MAC address) ensures the correctness and stability of multi-link communication.

According to some embodiments of the present disclosure, a first sub-element in the basic multi-link element may contain (e.g., carry) a Received Signal Strength Indication (RSSI). The RSSI may represent a strength of a signal received by the non-AP MLD on a link operated by one of the one or more AP MLDs, wherein the signal is transmitted from the AP MLD to the non-AP MLD. This assists the non-collocated AP MLD in making efficient decisions for multi-link establishment. For example, when the RSSI on certain links is too low, these links cannot be used for data transmission even if they are established. Therefore, the non-collocated AP MLD can refuse to establish such links (e.g., in the association response frame), thereby achieving rational configuration and utilization of wireless communication resources.

According to some embodiments of the present disclosure, the method may further include: transmitting a first association response frame to the non-AP MLD. The first association response frame may include one or more basic multi-link elements, and the one or more basic multi-link elements included in the first association response frame correspond one-to-one with the one or more basic multi-link elements included in the association request frame. A second sub-element of a basic multi-link element (e.g., each basic multi-link element) included in the first association response frame may indicate whether one AP MLD of the one or more AP MLDs is permitted to establish at least one multi-link. This allows the non-AP MLD to obtain simple information from the non-collocated AP MLD about whether the requested link establishment is permitted, thereby saving signaling overhead.

According to some embodiments of the present disclosure, the second sub-element is a per-STA profile sub-element.

According to some embodiments of the present disclosure, the method may further include: transmitting a second frame, which is different from the first association response frame, to the non-AP MLD, wherein the second frame carries identifiers corresponding to one or more AP MLDs. Thus, when the non-collocated AP MLD permits the establishment of a multi-link with the non-AP MLD carried by different AP MLDs, it enables the non-AP MLD to distinguish these different AP MLDs, ensuring the correctness and stability of multi-link communication.

Method for mapping services to links between a non-AP MLD and multiple collocated AP MLDs under a non-collocated AP MLD using a TID-to-Link mapping mechanism:
According to one or more embodiments of the present disclosure, Traffic Identifier-to-Link Mapping (TID-to-Link mapping) between a non-AP MLD and a non-collocated AP MLD can be implemented through various interaction methods. As examples, the following three methods are provided. In the examples, services can be divided into uplink (UL) transmission and downlink (DL) transmission.
1) The non-AP MLD can implement the mapping of a traffic identifier (TID) to a link by carrying one or more TID-to-Link mapping elements in an association request message (e.g., the association request frame) sent to the non-collocated AP MLD, as shown in Table 4 below.

**Table 4**

| Order | Information | Remarks |
|---|---|---|
| 1 | Capability Information | ... |
| ... | ... | ... |
| x | TID-to-Link Mapping Element (1) | Corresponding to AP MLD 1 (in DL) |
| x+1 | TID-to-Link Mapping Element (2) | Corresponding to AP MLD 1 (in UL) |
| x+2 | TID-to-Link Mapping Element (3) | Corresponding to AP MLD 2 (in DL) |
| x+3 | TID-to-Link Mapping Element (4) | Corresponding to AP MLD 2 (in UL) |
| ... | ... | ... |

Correspondingly, the non-collocated AP MLD replies to the non-AP MLD with the result of the TID-to-link mapping through an association response message (e.g., the association response frame), as shown in Table 5 below.

**Table 5**

| Order | Information | Remarks |
|---|---|---|
| 1 | Capability Information | ... |
| ... | ... | ... |
| x | TID-to-Link Mapping Element (1) | Corresponding to AP MLD 1 (in DL) |
| x+1 | TID-to-Link Mapping Element (2) | Corresponding to AP MLD 1 (in UL) |
| x+2 | TID-to-Link Mapping Element (3) | Corresponding to AP MLD 2 (in DL) |
| x+3 | TID-to-Link Mapping Element (4) | Corresponding to AP MLD 2 (in UL) |
| ... | ... | ... |

2) The mapping of a traffic identifier (TID) to a link between the non-AP MLD and the non-collocated AP MLD can also be implemented by exchanging TID-to-Link mapping request frames and TID-to-Link mapping response frames with each other. As examples, Table 6 and Table 7 below respectively show the action field structure of an example TID-to-Link mapping request frame and the action field structure of an example TID-to-Link mapping response frame.

**Table 6**

| Number | Information | Remarks |
|---|---|---|
| 1 | Category | ... |
| 2 | Protected EHT Action | ... |
| 3 | Dialog Token | ... |
| 4 | TID-to-Link Mapping Element (1) | Corresponding to AP MLD 1 (in DL) |
| 5 | TID-to-Link Mapping Element (2) | Corresponding to AP MLD 1 (in UL) |
| 6 | TID-to-Link Mapping Element (3) | Corresponding to AP MLD 2 (in DL) |
| 7 | TID-to-Link Mapping Element (4) | Corresponding to AP MLD 2 (in UL) |
| ... | ... | ... |

**Table 7**

| Number | Information | Remarks |
|---|---|---|
| 1 | Category | ... |
| 2 | Protected EHT Action | ... |
| 3 | Dialog Token | ... |
| 4 | Status Code | ... |
| 5 | TID-to-Link Mapping Element (1) | Corresponds to AP MLD 1 (in DL) |
| 6 | TID-to-Link Mapping Element (2) | Corresponds to AP MLD 1 (in UL) |
| 7 | TID-to-Link Mapping Element (3) | Corresponds to AP MLD 2 (in DL) |
| 8 | TID-to-Link Mapping Element (4) | Corresponds to AP MLD 2 (in UL) |
| ... | ... | ... |

3) The non-collocated AP MLD can carry a TID-to-Link mapping element in a Beacon frame and/or a Probe Response frame to notify the non-AP MLD of a mandatory TID-to-link mapping. As examples, Table 8 and Table 9 below respectively show the frame body structure of an example Beacon frame and an example Probe Response frame.

**Table 8**

| Number | Information | Remarks |
|---|---|---|
| 1 | Timestamp | ... |
| ... | ... | ... |
| x | TID-to-Link Mapping Element (1) | Corresponds to AP MLD 1 (in DL) |
| x+1 | TID-to-Link Mapping Element (2) | Corresponds to AP MLD 1 (in UL) |
| x+2 | TID-to-Link Mapping Element (3) | Corresponds to AP MLD 2 (in DL) |
| x+3 | TID-to-Link Mapping Element (4) | Corresponds to AP MLD 2 (in UL) |
| ... | ... | ... |

**Table 9**

| Number | Information | Remarks |
|---|---|---|
| 1 | Timestamp | ... |
| ... | ... | ... |
| x | TID-to-Link Mapping Element (1) | Corresponds to AP MLD 1 (in DL) |
| x+1 | TID-to-Link Mapping Element (2) | Corresponds to AP MLD 1 (in UL) |
| x+2 | TID-to-Link Mapping Element (3) | Corresponds to AP MLD 2 (in DL) |
| x+3 | TID-to-Link Mapping Element (4) | Corresponds to AP MLD 2 (in UL) |
| ... | ... | ... |

As can be seen, when performing the TID-to-link mapping, all three methods above use the TID-to-Link mapping element in the relevant frames to indicate the mapping relationship between the traffic identifier (TID) and the link identifier (Link ID). As an example, the format of the TID-to-Link mapping element is shown in FIG. 2 to FIG. 3A.

FIG. 2 illustrates the structure of an exemplary TID-to-Link mapping element according to some embodiments of the present disclosure. FIG. 3A illustrates the format of the TID-to-Link control field in an exemplary TID-to-Link mapping element according to some embodiments of the present disclosure.

As an example, when the Direction subfield of the TID-to-Link control field is set to 0, it may indicate that the current TID-to-Link mapping element indicates downlink TID-to-Link mapping information.

As an example, when the Direction subfield of the TID-to-Link control field is set to 1, it may indicate that the current TID-to-Link mapping element indicates uplink TID-to-Link mapping information.

As an example, when the Direction subfield of the TID-to-Link control field is set to 2, it may indicate that the current TID-to-Link mapping element indicates both downlink and uplink TID-to-Link mapping information.

As an example, the value 3 of the Direction subfield of the TID-to-Link control field may be a reserved value.

Based on research into existing technology, to better implement the mapping of different services to different links between a non-access point multi-link device (non-AP MLD) and multiple collocated access point multi-link devices (AP MLDs) under a non-collocated access point multi-link device (non-collocated AP MLD) through the traffic identifier-to-link (TID-to-Link) mapping mechanism, the following modifications can be made to the TID-to-Link mapping elements carried in the relevant frames:
Modification 1: The aforementioned relevant frames (such as in Table 4 to Table 9 above) can carry one or more (e.g., more than two) TID-to-Link mapping elements, wherein at most two TID-to-Link mapping elements can correspond to the mapping between the non-AP MLD and each AP MLD under the non-collocated AP MLD. For example, the TID-to-Link mapping element (1) in Table 4 to Table 9 above indicates a TID-to-Link mapping in the downlink between the non-AP MLD and AP MLD1 (i.e., the link requested/granted to be established between the non-AP MLD and AP MLD1 corresponds to downlink services), the TID-to-Link mapping element (2) indicates a TID-to-Link mapping in the uplink between the non-AP MLD and AP MLD1 (i.e., the link requested/granted to be established between the non-AP MLD and AP MLD1 corresponds to uplink services), the TID-to-Link mapping element (3) indicates a TID-to-Link mapping in the downlink between the non-AP MLD and AP MLD2 (i.e., the link requested/granted to be established between the non-AP MLD and AP MLD2 corresponds to downlink services), and the TID-to-Link mapping element (4) indicates a TID-to-Link mapping in the uplink between the non-AP MLD and AP MLD2 (i.e., the link requested/granted to be established between the non-AP MLD and AP MLD2 corresponds to uplink services).
Modification 2: The TID-to-Link control field can also be modified, which can be implemented in the following two ways.

FIG. 3B illustrates a format of an exemplary modified TID-to-Link control field according to some embodiments of the present disclosure.
1) Option 1: As shown in FIG. 3B, the reserved bits B6-B7 can be used to carry the collocated AP MLD identifier (ID) described in the above embodiments, to distinguish for which AP MLD's link under the non-collocated AP MLD the current TID-to-Link mapping element indicates the TID-to-Link mapping.
2) Option 2: By extending the length of the Link Mapping of TID 0 to Link Mapping of TID 7, the collocated AP MLD ID can be indicated in addition to the original Link ID bitmap. This allows, for example, the Link Mapping of TID 0 to Link Mapping of TID 7 to indicate the tuple <Collocated AP MLD ID, Link ID>, thereby distinguishing for which AP MLD's link under the non-collocated AP MLD the current TID-to-Link mapping element indicates the TID-to-Link mapping.

It can be understood that a person skilled in the art may make any suitable modifications to the TID-to-Link mapping element and/or the TID-to-Link control field as needed to better implement the TID-to-Link mapping mechanism between the non-AP MLD and the multiple collocated AP MLDs under the non-collocated AP MLD, and the present disclosure does not impose any limitation thereon.

Some exemplary embodiments of the present disclosure are provided below from the perspective of the non-AP MLD side. It can be understood that these embodiments are given for illustrative purposes only. A person skilled in the art can conceive of any suitable modifications, additions, deletions, variations, and/or combinations for these embodiments under the description and teachings of the present disclosure, thereby easily obtaining equivalent implementations of these embodiments.

According to some embodiments of the present disclosure, the wireless communication method for a non-AP MLD described above may further include: receiving, from the non-collocated AP MLD, a TID-to-Link mapping response frame for a TID-to-Link mapping. The TID-to-Link mapping response frame is sent by the non-collocated AP MLD after receiving a TID-to-Link mapping request frame from the non-AP MLD (for example, the non-collocated AP MLD sends the TID-to-Link mapping response frame in response to receiving the TID-to-Link mapping request frame from the non-AP MLD). For example, the TID-to-Link mapping request frame includes a first number of TID-to-Link mapping elements, and the TID-to-Link mapping response frame includes a second number of TID-to-Link mapping elements.

For example, the second number may be the same as or different from the first number. For example, when the non-collocated AP MLD grants the establishment of all requested multi-links, the first number may be equal to the second number. However, when the non-collocated AP MLD grants the establishment of a part of the requested multi-links, the first number may not be equal to the second number (for example, the second number is smaller than the first number). For example, when not relying on the Status Code field in the Per-STA Profile subelement, the non-collocated AP MLD may not include, in the TID-to-Link mapping response frame, the TID-to-Link mapping element corresponding to the AP MLD that carries the link requested by the non-AP MLD, which may cause the second number to be different from the first number.

For example, from a link perspective, there may exist at most two links (e.g., less than or equal to two links), between the non-AP MLD and one AP MLD included in the non-collocated AP MLD, which correspond to the TID-to-Link mapping elements. For example, from the perspective of a frame and/or a device (such as a non-AP MLD and an AP MLD), the TID-to-Link mapping request frame and the TID-to-Link mapping response frame can each include at most two TID-to-Link mapping elements for indicating the TID-to-Link mapping between the non-AP MLD and one AP MLD among one or more AP MLDs. For example, when the non-AP MLD requests to establish both an uplink and a downlink with a certain AP MLD, there can be two TID-to-Link mapping elements for indicating the TID-to-Link mapping between the non-AP MLD and that AP MLD. In this way, services can be mapped to different links simply and efficiently.

According to some embodiments of the present disclosure, the association request frame may include a first number of TID-to-Link mapping elements for a TID-to-Link mapping, and the first association response frame may include a second number of TID-to-Link mapping elements. For example, the second number may be the same as or different from the first number. For example, when the non-collocated AP MLD grants the establishment of all requested multi-links, the first number may be equal to the second number. However, when the non-collocated AP MLD grants the establishment of a part of the requested multi-links, the first number may not be equal to the second number (for example, the second number is smaller than the first number). For example, when not relying on the Status Code field in the Per-STA Profile subelement, the non-collocated AP MLD may not include, in the first association response frame, the TID-to-Link mapping element corresponding to the AP MLD that carries the link requested by the non-AP MLD, which may cause the second number to be different from the first number.

For example, from a link perspective, there may exist at most two links (e.g., less than or equal to two links), between the non-AP MLD and one AP MLD included in the non-collocated AP MLD, which correspond to the TID-to-Link mapping elements. For example, from the perspective of a frame and/or a device (such as a non-AP MLD and an AP MLD), the association request frame and the first association response frame can each include at most two TID-to-Link mapping elements for indicating the TID-to-Link mapping between the non-AP MLD and one AP MLD among one or more AP MLDs. For example, when the non-AP MLD requests to establish both an uplink and a downlink with a certain AP MLD, there can be two TID-to-Link mapping elements for indicating the TID-to-Link mapping between the non-AP MLD and that AP MLD. In this way, services can be mapped to different links simply and efficiently.

According to some embodiments of the present disclosure, the second frame may include one or more TID-to-Link mapping elements for a TID-to-Link mapping. For example, from a link perspective, there may exist at most two links (e.g., less than or equal to two links), between the non-AP MLD and one AP MLD included in the non-collocated AP MLD, which correspond to the TID-to-Link mapping elements. For example, from the perspective of a frame and/or a device (such as a non-AP MLD and an AP MLD), there can be at most two TID-to-Link mapping elements for indicating the TID-to-Link mapping between the non-AP MLD and one AP MLD among one or more AP MLDs. For example, when the non-AP MLD requests to establish both an uplink and a downlink with a certain AP MLD, there can be two TID-to-Link mapping elements for indicating the TID-to-Link mapping between the non-AP MLD and that AP MLD. In this way, services can be mapped to different links simply and efficiently in a mandatory manner.

According to some embodiments of the present disclosure, the TID-to-Link mapping control field of the TID-to-Link mapping element (e.g., each TID-to-Link mapping element) may include at least one bit for carrying a collocated AP MLD identifier (ID). The collocated AP MLD ID can indicate an identifier corresponding to an AP MLD that performs the TID-to-Link mapping with the non-AP MLD, so as to distinguish between the TID-to-Link mapping elements. This makes it possible to distinguish for which AP MLD's link under the non-collocated AP MLD the current TID-to-Link mapping element indicates the TID-to-Link mapping, saving signaling overhead and ensuring the correctness and stability of multi-link communication.

According to some embodiments of the present disclosure, the length of a predefined field of the TID-to-Link mapping element (e.g., each TID-to-Link mapping element) can be extended, so that the predefined field can simultaneously indicate a collocated AP MLD identifier (ID) and a link identifier (ID). This makes it possible to distinguish for which AP MLD's link under the non-collocated AP MLD the current TID-to-Link mapping element indicates the TID-to-Link mapping, ensuring the correctness and stability of multi-link communication.

Some exemplary embodiments of the present disclosure are provided below from the perspective of the non-collocated AP MLD side. It can be understood that these embodiments are given for illustrative purposes only. A person skilled in the art can conceive of any suitable modifications, additions, deletions, variations, and/or combinations for these embodiments under the description and teachings of the present disclosure, thereby easily obtaining equivalent implementations of these embodiments.

According to some embodiments of the present disclosure, the wireless communication method for a non-access point multi-link device (non-AP MLD) described above may further include: transmitting a traffic identifier-to-link (TID-to-Link) mapping response frame to the non-AP MLD. The TID-to-Link mapping response frame is transmitted by a non-collocated access point multi-link device (non-collocated AP MLD) in response to receiving a TID-to-Link mapping request frame from the non-AP MLD. For example, the TID-to-Link mapping request frame includes a first number of TID-to-Link mapping elements, and the TID-to-Link mapping response frame includes a second number of TID-to-Link mapping elements. The second number may be the same as or different from the first number. For example, when the non-collocated AP MLD grants the establishment of all requested multi-links, the first number may be equal to the second number. In contrast, when the non-collocated AP MLD grants the establishment of a portion of the requested multi-links, the first number may not be equal to the second number (e.g., the second number is less than the first number). For example, when not relying on the Status Code field in the Per-STA Profile subelement, the non-collocated AP MLD may not include, in the response frame, the TID-to-Link mapping element corresponding to the AP MLD that carries the link requested by the non-AP MLD, which can result in the second number being different from the first number.

For example, from a link perspective, there may exist at most two links (i.e., less than or equal to two links) corresponding to TID-to-Link mapping elements between the non-AP MLD and an AP MLD within the non-collocated AP MLD. For example, from the perspective of a frame and/or a device (such as a non-AP MLD and an AP MLD), the TID-to-Link mapping request frame and the TID-to-Link mapping response frame may each include at most two TID-to-Link mapping elements to indicate the TID-to-Link mapping between the non-AP MLD and a single AP MLD among one or more AP MLDs. For example, when the non-AP MLD requests to establish both an uplink and a downlink with a specific AP MLD, two TID-to-Link mapping elements can be used to indicate the TID-to-Link mapping between the non-AP MLD and that AP MLD. This allows services to be mapped to different links simply and efficiently.

According to some embodiments of the present disclosure, the association request frame may include a first number of TID-to-Link mapping elements for a traffic identifier-to-link (TID-to-Link) mapping, and the first association response frame includes a second number of TID-to-Link mapping elements. The second number may be the same as or different from the first number. For example, when the non-collocated AP MLD grants the establishment of all requested multi-links, the first number may be equal to the second number. In contrast, when the non-collocated AP MLD grants the establishment of a portion of the requested multi-links, the first number may not be equal to the second number (e.g., the second number is less than the first number). For example, when not relying on the Status Code field in the Per-STA Profile subelement, the non-collocated AP MLD may not include, in the response frame, the TID-to-Link mapping element corresponding to the AP MLD that carries the link requested by the non-AP MLD, which can result in the second number being different from the first number.

For example, from a link perspective, there may exist at most two links (i.e., less than or equal to two links) corresponding to TID-to-Link mapping elements between the non-AP MLD and an AP MLD within the non-collocated AP MLD. For example, from the perspective of a frame and/or a device (such as a non-AP MLD and an AP MLD), the association request frame and the first association response frame may each include at most two TID-to-Link mapping elements to indicate the TID-to-Link mapping between the non-AP MLD and a single AP MLD among one or more AP MLDs. For example, when the non-AP MLD requests to establish both an uplink and a downlink with a specific AP MLD, two TID-to-Link mapping elements can be used to indicate the TID-to-Link mapping between the non-AP MLD and that AP MLD. This allows services to be mapped to different links simply and efficiently.

According to some embodiments of the present disclosure, the second frame includes one or more TID-to-Link mapping elements for a traffic identifier-to-link (TID-to-Link) mapping. For example, from a link perspective, there may exist at most two links (i.e., less than or equal to two links) corresponding to TID-to-Link mapping elements between the non-AP MLD and an AP MLD within the non-collocated AP MLD. For example, from the perspective of a frame and/or a device (such as a non-AP MLD and an AP MLD), at most two TID-to-Link mapping elements may exist to indicate the TID-to-Link mapping between the non-AP MLD and a single AP MLD among one or more AP MLDs. For example, when the non-AP MLD requests to establish both an uplink and a downlink with a specific AP MLD, two TID-to-Link mapping elements can be used to indicate the TID-to-Link mapping between the non-AP MLD and that AP MLD. This allows services to be mapped to different links simply, efficiently, and in a mandatory manner.

According to some embodiments of the present disclosure, a TID-to-Link mapping control field of a TID-to-Link mapping element (e.g., each TID-to-Link mapping element) can include at least one bit for carrying a collocated AP MLD identifier (ID). The collocated AP MLD ID can indicate an identifier corresponding to the AP MLD that performs the TID-to-Link mapping with the non-AP MLD, thereby distinguishing among the TID-to-Link mapping elements. This makes it possible to distinguish which AP MLD's link, under the non-collocated AP MLD, the current TID-to-Link mapping element indicates for the TID-to-Link mapping, which saves signaling overhead and ensures the correctness and stability of multi-link communication.

According to some embodiments of the present disclosure, the length of a predefined field of the TID-to-Link mapping element (e.g., each TID-to-Link mapping element) can be extended, so that the predefined field can simultaneously indicate a collocated AP MLD identifier (ID) and a link identifier (ID). This makes it possible to distinguish which AP MLD's link, under the non-collocated AP MLD, the current TID-to-Link mapping element indicates for the TID-to-Link mapping, ensuring the correctness and stability of multi-link communication.

### Method for end time alignment of Physical Layer (PHY) Protocol Data Units (PPDUs) on different links in a scenario where a non-AP MLD establishes non-simultaneous transmission and reception (NSTR) link pairs with multiple collocated AP MLDs belonging to a non-collocated AP MLD:

Referring back to FIG. 1, non-AP MLD 1 establishes link 1 with AP MLD 1, which belongs to the non-collocated AP MLD, and non-AP MLD 1 establishes link 2 and link 3 with AP MLD 2, which also belongs to the non-collocated AP MLD. If link 1 and link 2 form a pair of non-simultaneous transmit and receive (NSTR) links, link 1 and link 3 form a pair of NSTR links, and link 2 and link 3 form a pair of NSTR links, then when non-AP MLD 1 uses links 1, 2, and 3 for frame transmission with the non-collocated AP MLD, the following conditions must be met to avoid transmit/receive self-interference among the affiliated STAs (STA 1, STA 2, and STA 3) of non-AP MLD 1.

According to one or more embodiments of the present disclosure, when more than one AP, belonging to AP MLDs affiliated with a non-collocated AP MLD, simultaneously transmits to non-AP STAs that are affiliated with a non-AP MLD operating on a pair of NSTR links, and at least one PPDU carries a frame requesting an immediate response, the transmitting APs should align the end times of the PPDUs that request the immediate response according to the rules defined below.

When the AP MLDs of the non-collocated AP MLD need to align the end times of simultaneously transmitted PPDUs, the following example preset criteria (a) and (b) should be met:
· Example preset criterion (a): The non-collocated AP MLD should ensure that the difference between the end times of the simultaneously transmitted PPDUs is less than or equal to a first preset time, where the end time of a PPDU is the end time of the last OFDM symbol or the end time of the packet extension (if present), whichever is later.

For example, the first preset time can be 8 µs, etc. It can be understood that a person skilled in the art may select any suitable first preset time as needed, and the present disclosure does not impose any limitation thereon.
· Example preset criterion (b): The non-collocated AP MLD should ensure that the end time of one or more PPDUs carrying a frame that requests the immediate response is at most a second preset time earlier than the end time of any PPDU that includes a trigger frame, where the CS Required subfield of the trigger frame is set to 1.

For example, the second preset time can be 4 µs, etc. It can be understood that a person skilled in the art may select any suitable second preset time as needed, and the present disclosure does not impose any limitation thereon.

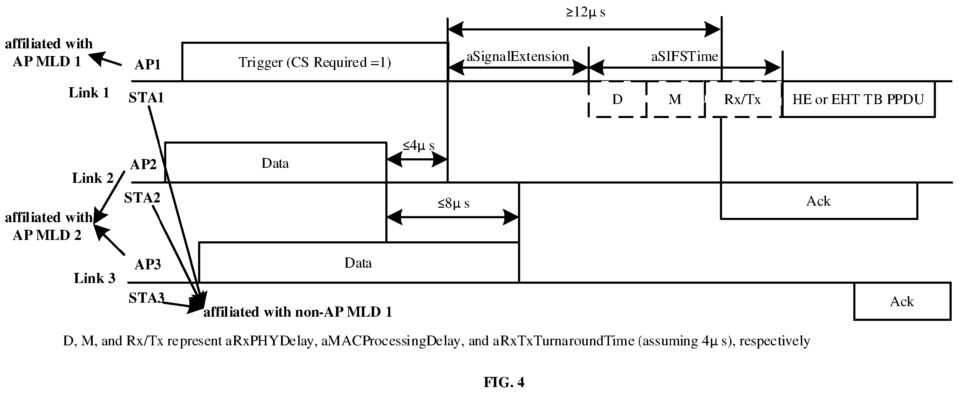

FIG. 4 illustrates a diagram of the timing relationship for Physical Layer Protocol Data Unit (PPDU) end time alignment according to some embodiments of the present disclosure. As shown in FIG. 4, AP 1 is affiliated with AP MLD 1, AP 2 and AP 3 are both affiliated with AP MLD 2, and AP MLD 1 and AP MLD 2 belong to the same non-collocated AP MLD. When the non-collocated AP MLD uses three links (such as link 1, link 2, and link 3 in the figure) to send PPDUs to non-AP MLD 1, and one or more PPDUs on one or more of these links require an immediate response (e.g., the Trigger frame and the Data frame in the figure), the end times of the PPDUs on these three links need to be aligned and satisfy the aforementioned conditions.

According to one or more embodiments of the present disclosure, to achieve PPDU end time alignment according to the above conditions, one or more of the following methods can be used:

### Option 1: Method for PPDU end time alignment for an ideal backhaul link

As shown in FIG. 1, when the backhaul link between AP MLDs is an ideal backhaul (e.g., the delay is negligible, or a wired backhaul is used), the Upper MAC of the non-collocated AP MLD (which manages and controls the Upper MAC and/or Lower MAC of each AP MLD) can send instructions via the ideal backhaul link to the Upper MAC and/or Lower MAC of each AP MLD. These instructions require the affiliated APs participating in the multi-link transmission to perform the transmission of PPDUs. For example, these instructions may include at least one of the following:
(1) the time when the PPDU on each link starts to be sent;
(2) the length of the PPDU on each link (the same length);
(3) the time when the PPDU on each link ends being sent;
(4) the above rules.

Specifically, item (4) includes the example preset criteria (a) and (b) as described above.

For example, in some situations, the above item (4) must be satisfied, while items (1) to (3) are additional options.

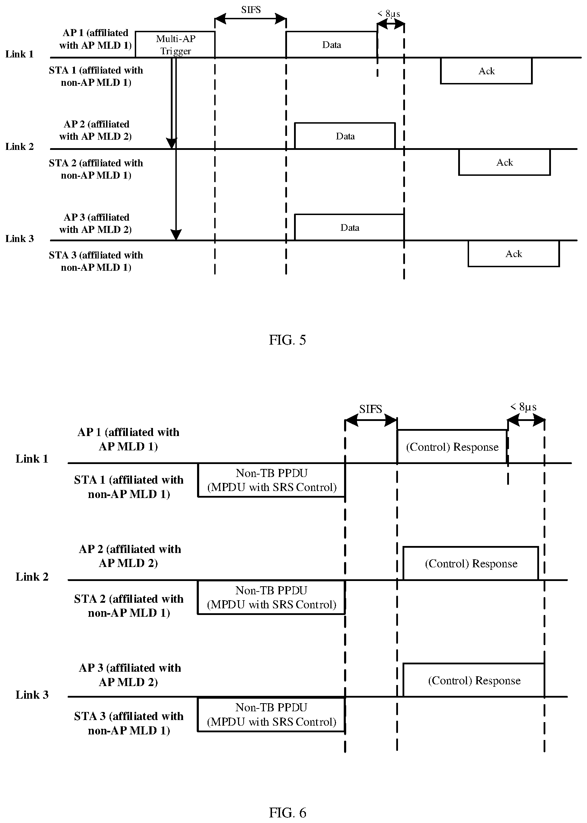

FIG. 5 illustrates a diagram of AP-triggered PPDU end time alignment according to some embodiments of the present disclosure.

### Option 2: Method for PPDU end time alignment where an AP sends a Trigger frame (e.g., a Multi-AP Trigger frame) for a non-ideal backhaul link

As shown in FIG. 1, when the backhaul link between AP MLDs is a non-ideal backhaul (e.g., a wireless backhaul is used), the Upper MAC of the non-collocated AP MLD (which manages and controls the Upper MAC and/or Lower MAC of each AP MLD) needs to have an affiliated AP of one AP MLD send a trigger frame/synchronization frame (such as the multi-AP trigger frame in FIG. 5). This is to ensure that the affiliated APs of other AP MLDs participating in the multi-link transmission maintain synchronous downlink transmission and satisfy the above rules.

As shown in FIG. 5, the affiliated AP 1 of AP MLD 1 transmits a multi-AP trigger frame to trigger devices participating in multi-link transmission (e.g., the affiliated AP 2 and affiliated AP 3 of AP MLD 2) to simultaneously transmit PPDUs. After a Short Interframe Space (SIFS) time, the affiliated AP 1 of AP MLD 1, the affiliated AP 2 of AP MLD 2, and the affiliated AP 3 of AP MLD 2, which are participating in the multi-link transmission, will simultaneously transmit PPDUs. However, because AP 1, AP 2, and AP 3 are affiliated with different AP MLDs, it is difficult to fully ensure that the end times of the PPDUs they transmit comply with the above-mentioned rules without additional restrictions. Therefore, it may be necessary for the multi-AP trigger frame to include at least the following information:
(1) the start time of PPDU transmission on each link;
(2) the length of the PPDU on each link (the same length);
(3) the end time of PPDU transmission on each link;
(4) the above-mentioned rules.

Specifically, item (4) includes the exemplary preset criteria (a) and (b) as described above.

For example, in some situations, item (4) above must be satisfied, while items (1) to (3) are optional.

As can be seen from FIG. 5, the difference between the end times of the Data (i.e., PPDUs) on link 1, link 2, and link 3 is maintained within a preset time (e.g., 8 µs, and the present disclosure is not limited thereto), which can satisfy the restrictions of the NSTR link pair.

### Option 3: Method for PPDU End Time Alignment through STA Control via SRS (Single Response Schedule)

To enable affiliated APs of different AP MLDs within the same non-collocated AP MLD to align their downlink PPDUs, synchronization operations can also be performed by the affiliated non-AP STAs of a non-AP MLD.

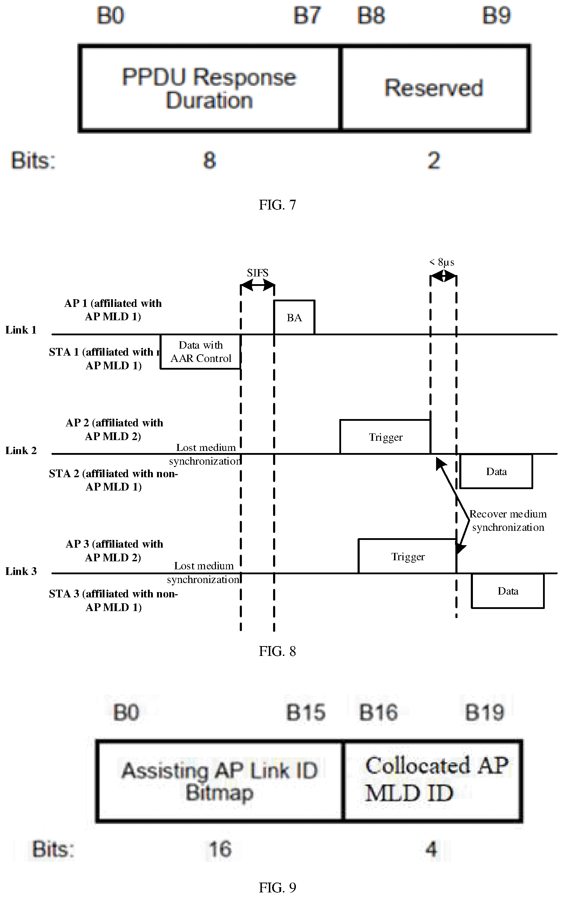

FIG. 6 illustrates a diagram of STA-based SRS-controlled PPDU end time alignment according to some embodiments of the present disclosure. FIG. 7 illustrates the format of a Control Information subfield of an example SRS control field according to some embodiments of the present disclosure.

As shown in FIG. 6, the affiliated non-AP STA 1, non-AP STA 2, and non-AP STA 3 of the non-AP MLD simultaneously transmit non-Trigger-Based Physical Layer Protocol Data Units (non-TB PPDUs). The MAC Protocol Data Unit (MPDU) in these non-TB PPDUs contains an SRS control field, where the format of the Control Information subfield of the SRS control field is as shown in FIG. 7. The PPDU Response Duration subfield contains the duration of the requested non-TB PPDU that carries a control response frame, which is transmitted in response to the PPDU carrying the SRS control subfield. For example, the unit of the PPDU Response Duration subfield can be 4 µs. It will be understood that a person skilled in the art may select any suitable length for the PPDU Response Duration subfield as needed, and the present disclosure is not limited in this regard.

After receiving the non-TB PPDUs containing the SRS control field, each affiliated AP (i.e., AP 1, AP 2, and AP 3) as shown in FIG. 6 immediately transmits a response frame, which can be a frame corresponding to the control response type or a non-TB PPDU containing data. The length of the response frame transmitted by each affiliated AP is indicated by the PPDU Response Duration subfield of the SRS control field, which is contained in the MPDU of the non-TB PPDU transmitted by the respective affiliated non-AP STA of the non-AP MLD. It should be noted that, to avoid interference for the NSTR link pairs of link 1, link 2, and link 3, the values of the PPDU Response Duration subfields of the SRS control fields contained in the non-TB PPDUs transmitted by the affiliated non-AP STA 1, affiliated non-AP STA 2, and affiliated non-AP STA 3 of the non-AP MLD are set to the same value, or the differences between them do not exceed a preset time (e.g., 8 µs, and the present disclosure is not limited thereto).

### Option 4: Method for PPDU End Time Alignment When a Link Loses Synchronization

FIG. 8 illustrates a diagram of PPDU end time alignment in a situation where a link loses synchronization, according to some embodiments of the present disclosure.

As shown in FIG. 8, when the affiliated non-AP STA 2 and affiliated non-AP STA 3 of non-AP MLD 1 lose synchronization with the non-collocated AP MLD, the still-synchronized affiliated non-AP STA 1 can transmit a data frame (or other frame) carrying an AP Assistance Request (AAR) control field to the non-collocated AP MLD on link 1 (on which it operates). Then, based on the links indicated by the AAR control field, the non-collocated AP MLD schedules the affiliated AP 2 of AP MLD 2 and the affiliated AP 3 of AP MLD 2 to transmit trigger frames to the out-of-sync affiliated non-AP STA 2 and affiliated non-AP STA 3 of non-AP MLD 1. After receiving the trigger frames from the affiliated AP 2 and affiliated AP 3 of AP MLD 2, the affiliated non-AP STA 2 and affiliated non-AP STA 3 of non-AP MLD 1 immediately transmit response frames (e.g., data frames Data), thereby restoring synchronization with the non-collocated AP MLD.

It should be noted that, to enable non-AP MLD 1 to restore synchronization with AP MLD 2 by using an AAR control field sent to AP MLD 1, the following modification needs to be made to the Control Information subfield of the AAR control field in the data frame (or other frame) transmitted by non-AP MLD 1.

FIG. 9 illustrates the format of a Control Information subfield of an example AAR control field according to some embodiments of the present disclosure.

As shown in the figure, in B16-B19 of the Control Information subfield of the example AAR control field, two, three, or all bits can be defined as a Collocated AP MLD ID. This ID is used to indicate that the current AAR control field is requesting an affiliated AP of a specific AP MLD within the non-collocated AP MLD to perform the synchronization recovery operation. In other words, the Collocated AP MLD ID in FIG. 9 indicates a specific AP MLD within the non-collocated AP MLD, while the Assisting AP Link ID Bitmap can indicate a specific affiliated AP and/or Link ID of that AP MLD.

Some exemplary embodiments of the present disclosure are provided below from the perspective of the non-collocated AP MLD side. It can be understood that these embodiments are given for illustrative purposes only. A person skilled in the art can conceive of any suitable modifications, additions, deletions, variations, and/or combinations for these embodiments under the description and teachings of the present disclosure, thereby easily obtaining equivalent implementations of these embodiments.

According to some embodiments of the present disclosure, when a non-AP MLD establishes non-simultaneous transmission and reception (NSTR) link pairs with a plurality of AP MLDs in a non-collocated AP MLD, the non-collocated AP MLD can perform end time alignment of Physical Layer Protocol Data Units (PPDUs) that are simultaneously transmitted on the multiple links between the non-AP MLD and the non-collocated AP MLD, based on a preset criterion. Thereby, effective control is achieved when a non-AP MLD device establishes NSTR link pairs with multiple AP MLDs in a non-collocated AP MLD, thus improving the efficiency and reliability of multi-link communication.

According to some embodiments of the present disclosure, the preset criterion can include: a difference between end times of any two PPDUs among the simultaneously transmitted PPDUs is less than or equal to a preset value (as an example and not a limitation, the preset value can be 8 µs; of course, the present disclosure is not limited in this regard), and/or, an end time of a PPDU carrying a frame that requests the immediate response is earlier than an end time of a PPDU comprising a trigger frame with a value of a Carrier Sense (CS) requirement subfield set to 1 by at most another preset value (as an example and not a limitation, the another preset value can be 4 µs; of course, the present disclosure is not limited in this regard).

According to some embodiments of the present disclosure, in a case where links between the plurality of AP MLDs comprised in the non-collocated AP MLD are ideal backhaul links, the non-collocated AP MLD can transmit an instruction to at least one AP MLD. The instruction can carry the preset criterion, and can also carry at least one of the following: a start time of PPDU transmission on each link of the multi-link, a length of the PPDU on each link of the multi-link, and/or an end time of PPDU transmission on each link of the multi-link. Thereby, a simple and effective method for achieving PPDU end time alignment is provided in the case where an ideal backhaul link is adopted between the various AP MLDs, improving the efficiency and reliability of multi-link communication.

According to some embodiments of the present disclosure, in a case where links between the plurality of AP MLDs comprised in the non-collocated AP MLD are non-ideal backhaul links, an Access Point (AP) of a first AP MLD among the at least one AP MLD can transmit a multi-AP trigger frame to an AP of a second AP MLD among the at least one AP MLD, wherein the multi-AP trigger frame can be used to cause the AP of the second AP MLD to maintain synchronous transmission. The first AP MLD is different from the second AP MLD. The multi-AP trigger frame can carry the preset criterion, and can also carry at least one of the following: a start time of PPDU transmission on each link of the multi-link, a length of the PPDU on each link of the multi-link, and/or an end time of PPDU transmission on each link of the multi-link. Thereby, a simple and effective method for achieving PPDU end time alignment is provided in the case where a non-ideal backhaul link is adopted between the various AP MLDs, improving the efficiency and reliability of multi-link communication.

Some exemplary embodiments of the present disclosure are provided below from the perspective of the non-AP MLD side. It can be understood that these embodiments are given for illustrative purposes only. A person skilled in the art can conceive of any suitable modifications, additions, deletions, variations, and/or combinations for these embodiments under the description and teachings of the present disclosure, thereby easily obtaining equivalent implementations of these embodiments.

According to some embodiments of the present disclosure, when a non-AP MLD establishes non-simultaneous transmission and reception (NSTR) link pairs with a plurality of AP MLDs in a non-collocated AP MLD, a plurality of non-Access Point Stations (non-AP STAs) in the non-AP MLD can transmit non-Trigger-Based Physical Layer Protocol Data Units (non-TB PPDUs) to a plurality of Access Points (APs) corresponding one-to-one with the plurality of non-AP STAs. As described in this disclosure, when referring to "a plurality of access points (APs) corresponding one-to-one with the plurality of non-access point stations (non-AP STAs)", it means that each non-AP STA in the non-AP MLD can be paired with an affiliated AP of a respective collocated AP MLD (e.g., in the non-collocated AP MLD). In each pair of non-AP STA and AP, the non-AP STA and the AP are peers relative to each other. That is, when one of the non-AP STA and the AP acts as a transmitter, the other acts as a receiver, and vice versa.

According to some embodiments of the present disclosure, a Medium Access Control Protocol Data Unit (MPDU) in the non-TB PPDU (e.g., each non-TB PPDU) can contain a Single Response Schedule (SRS) control field.

According to some embodiments of the present disclosure, a PPDU Response Duration subfield in the SRS control field can indicate a length of a feedback frame transmitted by each AP in at least one AP MLD, and the PPDU Response Duration subfields corresponding to the non-TB PPDUs (e.g., each respective non-TB PPDU) can be set to a same value or can be set such that the difference between them does not exceed a preset value. This depends on the hardware capability design, and thus such a preset value can ensure that interference between the transmitting and receiving devices is staggered. For example, the preset value can be 8 µs; of course, the present disclosure is not limited in this regard.

According to some embodiments of the present disclosure, when the non-AP MLD establishes a non-simultaneous transmission and reception (NSTR) link pair with a plurality of AP MLDs in the non-collocated AP MLD, the method can further include: when an out-of-sync link exists between the non-AP MLD and the non-collocated AP MLD, a synchronized non-Access Point Station (non-AP STA) in the non-AP MLD transmitting a frame carrying an Access Point Assisted Request (AAR) control field to the non-collocated AP MLD through a link corresponding to the non-AP STA, wherein preset bits in a Control Information subfield in the AAR control field indicate an identifier of an AP MLD for which the AAR control field requests to perform a synchronization recovery operation; the non-AP MLD receiving a trigger frame sent by an Access Point (AP) corresponding to the out-of-sync link among the plurality of AP MLDs; and in response to receiving the trigger frame, a Station (STA) in the non-AP MLD transmitting a data frame to the AP to complete the synchronization operation.

Specifically, when a non-AP MLD establishes non-simultaneous transmission and reception (NSTR) link pairs with multiple AP MLDs in a non-collocated AP MLD, if an out-of-sync link exists between the non-AP MLD and the non-collocated AP MLD, a synchronized non-access point station (non-AP STA) in the non-AP MLD can transmit a frame carrying an access point assisted request (AAR) control field to the non-collocated AP MLD. The frame is transmitted via the link corresponding to the non-AP STA (which is a synchronized link). Specifically, the frame is transmitted to a synchronized AP MLD within the non-collocated AP MLD, and this AP MLD also has a peer relationship with the aforementioned synchronized non-AP STA. For example, the frame may be a data frame. The AAR control field may be used to perform a synchronization operation, for example, by carrying information that indicates which affiliated APs of which AP MLDs need to perform the synchronization operation. For example, the non-collocated AP MLD may schedule the affiliated APs of the AP MLDs indicated by the AAR control field to send a trigger frame to the peer non-AP STAs that are out-of-sync. Subsequently, the non-AP MLD may receive a trigger frame sent by an access point (AP) corresponding to the out-of-sync link among the multiple AP MLDs. Specifically, in the step described above, the trigger frame is received by the non-AP STA of the non-AP MLD that has a peer relationship with the affiliated AP of the out-of-sync AP MLD. Furthermore, in response to receiving the trigger frame, these non-AP STAs transmit a data frame to the out-of-sync APs, thereby completing the synchronization operation.

According to some embodiments of the present disclosure, the AAR control field may include a control information subfield. A first preset bit (or bits) of the control information subfield may indicate at least one AP MLD that is to perform the synchronization operation, and a second preset bit (or bits) of the control information subfield may indicate a link identifier (ID) of the out-of-sync link corresponding to the at least one AP MLD and/or an AP within the at least one AP MLD that corresponds to the out-of-sync link.

### Method for a non-AP MLD to use one link for channel sounding with multiple non-collocated AP MLDs and report the sounding results on another link:

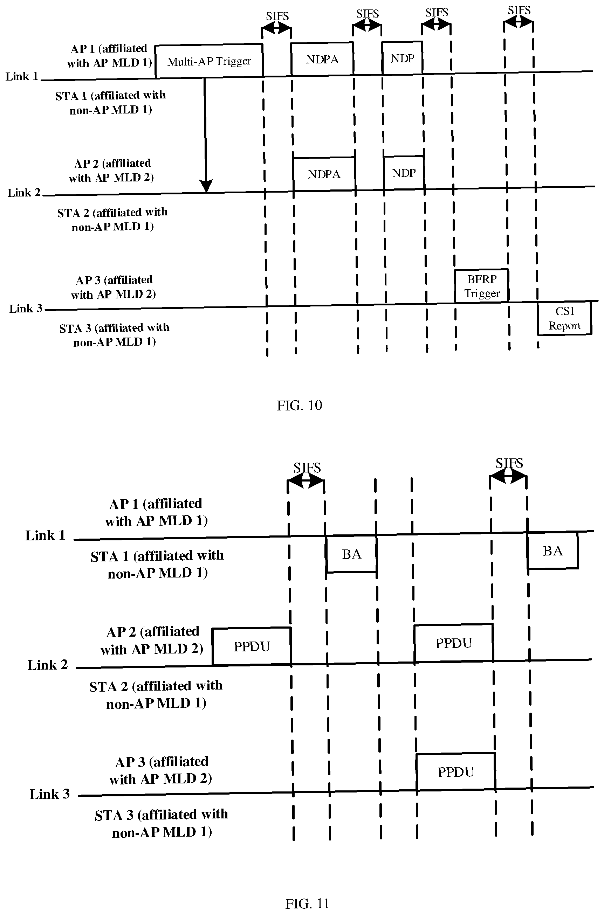

FIG. 10 illustrates channel sounding result reporting between a non-AP MLD and a non-collocated AP MLD according to some embodiments of the present disclosure.

As shown, in one or more embodiments of the present disclosure, for a non-collocated AP MLD, affiliated AP 1 of AP MLD 1 sends a multi-AP trigger frame to affiliated AP 2 of AP MLD 2 to request that affiliated AP 2 perform channel sounding together with affiliated AP 1. After a Short Inter-Frame Space (SIFS) interval, for example, affiliated AP 1 and affiliated AP 2 respectively transmit a Null Data Packet Announcement (NDPA) frame and a Null Data Packet (NDP) frame on link 1 and link 2 to perform channel sounding. Then, affiliated AP 3 of AP MLD 2 may send a Beamforming Report Poll (BFRP) trigger frame on link 3 to request that non-AP MLD 1 feed back the channel sounding results from link 1 and link 2 to affiliated AP 3 of AP MLD 2 via link 3. This ultimately transmits the channel sounding results to the non-collocated AP MLD.

In the above-described embodiment, based on an analysis of the prior art, a new rule proposed for the existing 802.11 standard is to allow a BFRP trigger frame to be sent by an affiliated AP of another AP MLD within the same non-collocated AP MLD, or by another affiliated AP of the same AP MLD within the same non-collocated AP MLD. This is done to obtain channel sounding results on one or more other links besides the current link. The benefit of this approach is that load balancing or more efficient reporting of channel sounding results can be achieved. For example, if link 1 and link 2 are links in the 2.4 GHz band, reporting the channel state information (CSI) (e.g., a CSI report) on these links may take a longer time. This is because CSI reports are typically large, and the 2.4 GHz band has limited bandwidth and/or severe interference. However, if link 3 is in the 6 GHz band, which has a wider channel bandwidth and/or weaker interference, reporting a large-sized CSI report via link 3 will take less time. It should be noted that the operating frequency bands of the links in the examples of the present disclosure are provided for illustrative purposes only and are not intended to be limiting.

In addition, the CSI report frame on link 3 is required to separately indicate the channel sounding results from link 1 and link 2. Thus, for example, to provide differentiation, a tuple such as <MLD MAC Address, Link ID>, <Collocated AP MLD ID, Link ID>, or <transmitter MAC address, receiver MAC address> can be included in the CSI report frame on link 3. It should be noted that the "transmitter" and "receiver" mentioned above refer to the roles with respect to the NDP frame. That is, the device that sends the NDP frame is the transmitter, and the device that receives the NDP frame is the receiver.

Some exemplary embodiments of the present disclosure are provided below from the perspective of the non-AP MLD. It is to be understood that these embodiments are provided for illustrative purposes only. Those skilled in the art, with the benefit of the description and teachings herein, can devise suitable modifications, additions, deletions, variations, and/or combinations for these embodiments to readily obtain equivalent implementations.

According to some embodiments of the present disclosure, the wireless communication method for a non-access point multi-link device (non-AP MLD) described above may further include: receiving a beamforming report poll (BFRP) trigger frame from the non-collocated AP MLD, wherein the BFRP trigger frame is transmitted on a second link and instructs the non-AP MLD to transmit a channel state information (CSI) report of a first link to the non-collocated AP MLD via the second link, where both the first link and the second link are links established between the non-collocated AP MLD and the non-AP MLD; and in response to receiving the BFRP trigger frame, transmitting the CSI report to the non-collocated AP MLD via the second link. In this way, efficient utilization of channel resources can be achieved, thereby improving the efficiency of wireless communication.

According to some embodiments of the present disclosure, the method may further include: before receiving the BFRP trigger frame from the non-collocated AP MLD, receiving a null data packet announcement (NDPA) frame and a null data packet (NDP) frame from the non-collocated AP MLD via the first link.

According to some embodiments of the present disclosure, when the first link comprises multiple links, the CSI report may indicate the channel sounding results for each of the multiple links separately. This allows the channel sounding results of different links to be distinguished, which facilitates the efficient allocation of channel resources.

According to some embodiments of the present disclosure, the CSI report includes one of the following tuples: <MLD MAC address, Link identifier (ID)>, <collocated AP MLD ID, Link ID>, or <transmitter MAC address, receiver MAC address>.

Some exemplary embodiments of the present disclosure are provided below from the perspective of the non-collocated AP MLD. It is to be understood that these embodiments are provided for illustrative purposes only. Those skilled in the art, with the benefit of the description and teachings herein, can devise suitable modifications, additions, deletions, variations, and/or combinations for these embodiments to readily obtain equivalent implementations.

According to some embodiments of the present disclosure, the wireless communication method for a non-collocated access point multi-link device (non-collocated AP MLD) described above may further include: transmitting a beamforming report poll (BFRP) trigger frame to the non-AP MLD, wherein the BFRP trigger frame is transmitted on a second link and instructs the non-AP MLD to transmit a channel state information (CSI) report of a first link to the non-collocated AP MLD via the second link, where both the first link and the second link are links established between the non-collocated AP MLD and the non-AP MLD; and in response to transmitting the BFRP trigger frame, receiving the CSI report from the non-AP MLD via the second link. In this way, efficient utilization of channel resources can be achieved, thereby improving the efficiency of wireless communication.

According to some embodiments of the present disclosure, the method may further include: before transmitting the BFRP trigger frame to the non-AP MLD, transmitting a null data packet announcement (NDPA) frame and a null data packet (NDP) frame to the non-AP MLD via the first link.

According to some embodiments of the present disclosure, when the first link includes multiple links, the CSI report may indicate the channel sounding results of the multiple links. This allows the channel sounding results of different links to be distinguished, which facilitates the efficient allocation of channel resources.

According to some embodiments of the present disclosure, the CSI report includes one of the following tuples: <MLD MAC address, Link identifier (ID)>, <collocated AP MLD ID, Link ID>, or <transmitter MAC address, receiver MAC address>.

### Method for a non-AP MLD to use one link for data transmission and another link for acknowledgement (Ack) with a non-collocated AP MLD:

FIG. 11 illustrates a diagram of data transmission and acknowledgement between a non-AP MLD and a non-collocated AP MLD according to some embodiments of the present disclosure.

Similarly, to ensure efficient transmission on certain high-speed links (e.g., link 2 operating in the 5 GHz band and link 3 operating in the 6 GHz band in FIG. 11), the block acknowledgement (BA) for these links can be transmitted on another link (e.g., link 1 operating in the 2.4 GHz band in FIG. 11). This avoids frequent interruptions to the high-speed link transmissions.

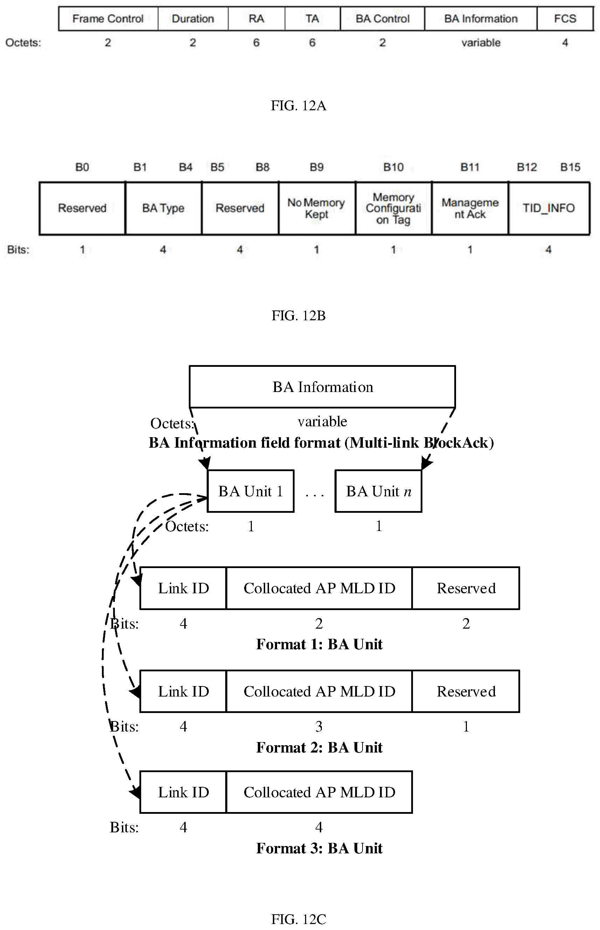

FIG. 12A illustrates the format of an example block acknowledgement frame according to some embodiments of the present disclosure. FIG. 12B illustrates the format of a BA control field of an example block acknowledgement frame according to some embodiments of the present disclosure. FIG. 12C illustrates the definition of a BA information field of an example multi-link block acknowledgement frame according to some embodiments of the present disclosure.

The following method can be used to enable a block acknowledgement, which corresponds to physical layer protocol data units (PPDUs) on one or more links, to be sent in reply on a different link.

As shown in FIG. 12A, the format of an example block acknowledgement frame is illustrated, wherein the format of the BA control field is exemplarily illustrated in FIG. 12B.

Table 10 below provides the definition of the BA Type in the BA control field.

For example, when the value of the BA Type is defined as 0, 4, 5, 9, 12, 13, 14, or 15 (using the value 0 in Table 10 below as an example), the BlockAck is referred to as a Multi-link variant and is used for acknowledging PPDUs from other links. In this case, various definitions for the BA Information field of a Multi-link BlockAck frame are shown in FIG. 12C. As shown, the BA Information field may include one or more Block Acknowledgement Unit (BA Unit) fields. Each BA Unit field may include a 4-bit Link Identifier (Link ID) and a 2/3/4-bit collocated AP MLD Identifier (Collocated AP MLD ID) (corresponding respectively to the three BA Unit formats shown in FIG. 12C). These are used together to indicate which PPDU(s) on which link(s), corresponding to which affiliated AP(s) of which AP MLD(s), are being acknowledged by this multi-link block acknowledgement frame.

**Table 10**

| BA Type | Block Acknowledgement Frame Variant |
|---|---|
| 0 | Multi-link |
| 1 | Extended Compressed |
| 2 | Compressed |
| 3 | Multi-TID |
| 4-5 | Reserved |
| 6 | GCR |
| 7 | EDMG Multi-TID |
| 8 | EDMG Compressed |
| 9 | Reserved |
| 10 | GLK-GCR |
| 11 | Multi-STA |
| 12-15 | Reserved |

Thus, by transmitting the block acknowledgement for certain high-speed links on other links, frequent interruptions to high-speed link transmission can be avoided, thereby ensuring efficient data transmission on the high-speed links.

Some exemplary embodiments of the present disclosure are provided below from the perspective of the non-AP MLD. It is to be understood that these embodiments are provided for illustrative purposes only. Those skilled in the art, with the benefit of the description and teachings herein, can devise suitable modifications, additions, deletions, variations, and/or combinations for these embodiments to readily obtain equivalent implementations.

According to some embodiments of the present disclosure, the wireless communication method for a non-access point multi-link device (non-AP MLD) described above may further comprise: receiving at least one physical layer protocol data unit (PPDU) from a non-collocated AP MLD via at least one link of a multi-link with the non-collocated AP MLD; and in response to receiving the at least one PPDU, transmitting a block acknowledgement (BA) frame for the at least one PPDU to the non-collocated AP MLD via another link of the multi-link, wherein the another link is different from the at least one link. In this way, by using separate links for data transmission acknowledgement to avoid interruption of data transmission, the throughput of the link carrying the data transmission is increased, and the efficiency of wireless communication is improved.

According to some embodiments of the present disclosure, a value of a BA Type subfield in a BA Control field of the BA frame indicates that the BA frame is a multi-link BA frame for acknowledging PPDUs on one or more other links of the multi-link, the one or more other links being different from the another link.

According to some embodiments of the present disclosure, a BA Information field of the BA frame comprises one or more BA unit subfields, and the one or more BA unit subfields are used to jointly indicate the links in the multi-link that carried the acknowledged PPDUs (e.g., jointly indicating the links in the multi-link for which the BA frame is acknowledging PPDUs).

According to some embodiments of the present disclosure, each BA unit subfield comprises a Link identifier (ID) and/or a collocated AP MLD identifier (ID). In this way, the links carrying data transmission and/or the collocated AP MLDs can be distinguished, ensuring the correctness of wireless communication.

Some exemplary embodiments of the present disclosure are provided below from the perspective of the non-collocated AP MLD side. It is to be understood that these embodiments are provided for illustrative purposes only. Those skilled in the art, in light of the description and teachings of the present disclosure, can conceive of any suitable modifications, additions, deletions, variations, and/or combinations for these embodiments to readily obtain equivalent implementations thereof.

According to some embodiments of the present disclosure, the wireless communication method for a non-collocated access point multi-link device (non-collocated AP MLD) described above may further comprise: transmitting at least one physical layer protocol data unit (PPDU) to a non-AP MLD via at least one link of a multi-link with the non-AP MLD; and in response to transmitting the at least one PPDU, receiving a block acknowledgement (BA) frame for the at least one PPDU from the non-AP MLD via another link of the multi-link, wherein the another link is different from the at least one link. In this way, by using separate links for data transmission acknowledgement to avoid interruption of data transmission, the throughput of the link carrying the data transmission is increased, and the efficiency of wireless communication is improved.

According to some embodiments of the present disclosure, a value of a BA Type subfield in a BA Control field of the BA frame indicates that the BA frame is a multi-link BA frame for acknowledging PPDUs on one or more other links of the multi-link, the one or more other links being different from the another link.

According to some embodiments of the present disclosure, a BA Information field of the BA frame comprises one or more BA unit subfields, and the one or more BA unit subfields are used to jointly indicate the links in the multi-link that carried the acknowledged PPDUs (e.g., jointly indicating the links in the multi-link for which the BA frame is acknowledging PPDUs).

According to some embodiments of the present disclosure, each BA unit subfield comprises a Link ID and a collocated AP MLD ID. In this way, the links carrying data transmission and/or the collocated AP MLDs can be distinguished, ensuring the correctness of wireless communication.

### Method for seamless roaming of a non-AP MLD among multiple collocated AP MLDs affiliated with a non-collocated AP MLD:

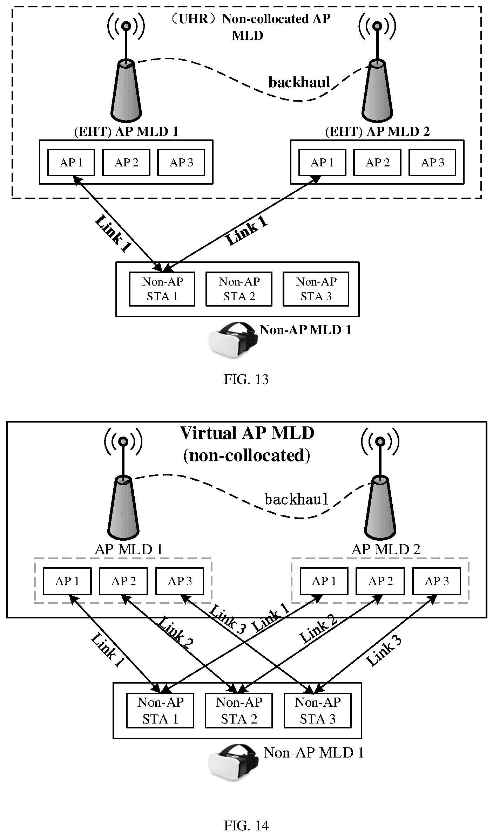

FIG. 13 illustrates a diagram of seamless roaming of a non-AP MLD among multiple collocated AP MLDs affiliated with a non-collocated AP MLD, according to some embodiments of the present disclosure.

As shown in the figure, according to one or more embodiments of the present disclosure, a non-AP MLD 1 can establish links having the same Link ID with different collocated AP MLDs that are affiliated with a non-collocated AP MLD. For example, an affiliated non-AP STA 1 of the non-AP MLD 1 establishes a link, Link 1, with Link ID = 1 with an affiliated AP 1 of an AP MLD 1, and the affiliated non-AP STA 1 of the non-AP MLD 1 also establishes a link, Link 1, with Link ID = 1 with an affiliated AP 1 of an AP MLD 2. In some examples, these two links, Link 1, with Link ID = 1 can operate on the same channel. In some examples, these two links, Link 1, with Link ID = 1 can operate on different channels.

When the non-AP MLD 1 moves within the coverage area of the non-collocated AP MLD (e.g., from the coverage area of the current AP MLD 1 to the coverage area of the target AP MLD 2), Link 1 of the non-AP MLD 1 needs to be switched between the affiliated AP 1 of the AP MLD 1 and the affiliated AP 1 of the AP MLD 2. Based on the related art, the specific switching method can be classified into the following scenarios, for example, depending on the role of the Transmission Opportunity (TXOP) holder.

### Option 1: Method with the non-AP MLD as the TXOP holder

As shown in FIG. 13, if the affiliated non-AP STA 1 of the non-AP MLD 1 is the TXOP holder, exemplary steps for switching links with the same Link ID during the movement of the non-AP MLD 1 comprise:
1) At time Tᵢ, the affiliated non-AP STA 1 of the non-AP MLD 1 sends PPDU i (or Data i) to the affiliated AP 1 of the AP MLD 1 via Link 1;
2) The affiliated non-AP STA 1 of the non-AP MLD 1 indicates to the affiliated AP 1 of the AP MLD 1 via Link 1 that the affiliated non-AP STA 1 is about to switch to the affiliated AP 1 of the AP MLD 2 (in some examples, this step is optional);
3) The affiliated AP 1 of the AP MLD 1 transfers relevant information of the affiliated non-AP STA 1 of the non-AP MLD 1 and remaining cached data to the affiliated AP 1 of the AP MLD 2 via a backhaul link (to prepare for the switch; in some examples, this step is optional);
4) At time Tᵢ₊₁, the affiliated non-AP STA 1 of the non-AP MLD 1 sends PPDU i+1 (or Data i+1) to the affiliated AP 1 of the AP MLD 2 via Link 1, and disconnects from Link 1 of the AP MLD 1.

In this process, since the affiliated non-AP STA 1 of the non-AP MLD 1 is the TXOP holder, it can decide the destination for the PPDU (or Data). When the non-AP MLD 1 moves closer to the AP MLD 2 and away from the AP MLD 1, the connection to Link 1 of the AP MLD 1 can be disconnected, and only the connection with the link to the AP MLD 2 is maintained. Based on this embodiment, the link switching of the non-AP MLD during roaming does not need to be performed through a Link Reconfiguration mechanism, thereby achieving seamless roaming.

Thus, through the control of the TXOP holder, it is ensured that there is no interruption during movement, and a seamless switch to a new access point is possible, providing a continuous communication connection. By avoiding the use of the link reconfiguration mechanism, communication delay and system overhead during the switching process are reduced. Such seamless roaming can enhance user experience and support requirements for continuous communication in various application scenarios, such as wireless mobile devices, smart cities, or industrial automation.

### Option 2: Method with the AP MLD as the TXOP holder, sharing the current AP MLD's TXOP with the non-AP MLD

As shown in FIG. 13, when the affiliated AP 1 of the AP MLD 1 is the TXOP holder, if it is desired to communicate using Link 1 with the affiliated AP 1 of the AP MLD 2 during the movement of the non-AP MLD 1, the following exemplary steps can be performed:
1) At time Tᵢ, the affiliated non-AP STA 1 of the non-AP MLD 1 sends PPDU i (or Data i) to the affiliated AP 1 of the AP MLD 1 via Link 1;
2) The affiliated non-AP STA 1 of the non-AP MLD 1 sends a handover request to the affiliated AP 1 of the AP MLD 1, requesting the affiliated AP 1 to share the TXOP with the affiliated non-AP STA 1;
3) The affiliated AP 1 of the AP MLD 1 shares the TXOP with the affiliated non-AP STA 1 of the non-AP MLD 1 through a Triggered TXOP Sharing mechanism;
4) The affiliated non-AP STA 1 of the non-AP MLD 1 directly uses the current TXOP to send PPDU i+1 (or Data i+1) to the affiliated AP 1 of the AP MLD 2, and disconnects from Link 1 of the AP MLD 1.

Through the above exemplary steps, when the non-AP MLD 1 moves near the AP MLD 2 and away from the AP MLD 1, the connection to Link 1 of the AP MLD 1 can be disconnected, and only the connection with the link to the AP MLD 2 is maintained. Based on this embodiment, the link switching of the non-AP MLD during roaming does not need to be performed through a link reconfiguration mechanism, thereby achieving seamless roaming.

Thus, by having the AP MLD as the TXOP holder and sharing the current AP MLD's TXOP with the non-AP MLD, seamless roaming with link handover is achieved during the movement of the non-AP MLD. Through the Triggered TXOP Sharing mechanism, the affiliated STA of the non-AP MLD can obtain the TXOP of the current AP MLD and directly use this TXOP to communicate with the target AP MLD, without needing a link reconfiguration mechanism. This method enables immediate data transmission when switching links and provides a continuous communication connection, enhancing user experience and supporting requirements for continuous communication in various application scenarios, such as wireless mobile devices, smart cities, or industrial automation.

### Option 3: Method with the AP MLD as the TXOP holder, sharing the current AP MLD's TXOP with the target AP MLD

As shown in FIG. 13, when the affiliated AP 1 of the AP MLD 1 is the TXOP holder, if it is desired to communicate using Link 1 with the affiliated AP 1 of the AP MLD 2 during the movement of the non-AP MLD 1, the following exemplary steps can be performed:
1) At time Tᵢ, the affiliated non-AP STA 1 of the non-AP MLD 1 sends PPDU i (or Data i) to the affiliated AP 1 of the AP MLD 1 via Link 1;
2) The affiliated non-AP STA 1 of the non-AP MLD 1 sends a handover request to the affiliated AP 1 of the AP MLD 1, indicating that the target AP is the affiliated AP 1 of the AP MLD 2;
3) The affiliated AP 1 of the AP MLD 1 shares the TXOP with the affiliated AP 1 of the AP MLD 2 through a Triggered TXOP Sharing mechanism;
4) The affiliated AP 1 of the AP MLD 2 directly uses the current TXOP to send PPDU i+1 (or Data i+1) to the affiliated non-AP STA 1 of the non-AP MLD 1, and disconnects from Link 1 of the AP MLD 1.

In this process, when the non-AP MLD 1 moves closer to the AP MLD 2 and away from the AP MLD 1, it is possible to disconnect from Link 1 of the AP MLD 1 and maintain the connection with the link to the AP MLD 2. Based on this embodiment, the link switching of the non-AP MLD during roaming does not need to be performed through a link reconfiguration mechanism, thereby achieving seamless roaming.

Thus, by using the AP MLD as the TXOP holder, the Triggered TXOP Sharing mechanism, and the handover request indicating the target AP, fast and seamless link handover and a continuous communication connection are achieved. When the non-AP MLD moves near the target AP MLD and away from the original AP MLD, it is possible to disconnect from the original AP MLD and only maintain the connection with the target AP MLD, achieving seamless roaming. This allows a user to maintain a stable communication connection during movement, improving the continuity of wireless communication and user experience.

In the related art, the non-collocated AP MLD architecture cannot be transparent to the non-AP MLD, which leads to relatively large overhead for the frame structure and signaling. Therefore, it is highly desirable to design a new non-collocated AP MLD architecture.

To address this, the present disclosure proposes a virtual AP MLD architecture to achieve transparency to the non-AP MLD and to simplify the frame structure and signaling. Furthermore, the present disclosure describes aspects such as multi-link capability discovery, multi-link establishment, multi-link coordinated transmission, and seamless roaming within this virtual AP MLD architecture.

Some exemplary embodiments of the present disclosure are provided below from the perspective of a non-access point multi-link device (non-AP MLD). It is to be understood that these embodiments are provided for illustrative purposes only. Those skilled in the art, with the benefit of the description and teachings herein, can devise any suitable modifications, additions, deletions, variations, and/or combinations for these embodiments to readily obtain equivalent implementations thereof.

According to some embodiments of the present disclosure, if a non-AP MLD establishes a third link and a fourth link with a first AP MLD and a second AP MLD in a non-collocated AP MLD, respectively, the third link and the fourth link have the same Link identifier (ID), and the non-AP MLD is a holder of a transmission opportunity (TXOP): then the non-AP MLD may transmit a first physical layer protocol data unit (PPDU) to the first AP MLD via the third link at a first time; and transmit a second PPDU to the second AP MLD via the fourth link and disconnect the third link at a second time subsequent to the first time. In this way, link switching for the non-AP MLD during roaming does not need to be performed through a Link Reconfiguration mechanism, thereby achieving uninterrupted roaming.

According to some embodiments of the present disclosure, if a non-AP MLD establishes a third link and a fourth link with a first AP MLD and a second AP MLD in a non-collocated AP MLD, respectively, the third link and the fourth link have the same Link ID, and the first AP MLD is a holder of a TXOP: then the non-AP MLD may transmit a first PPDU to the first AP MLD via the third link at a first time; transmit request information to the first AP MLD, wherein the request information is used to request a link switch and to request the first AP MLD to share the TXOP with the non-AP MLD; and based on the shared TXOP, transmit a second PPDU to the second AP MLD via the fourth link and disconnect the third link. In this way, link switching for the non-AP MLD during roaming does not need to be performed through a Link Reconfiguration mechanism, thereby achieving uninterrupted roaming.

According to some embodiments of the present disclosure, if a non-AP MLD establishes a third link and a fourth link with a first AP MLD and a second AP MLD in a non-collocated AP MLD, respectively, the third link and the fourth link have the same Link ID, and the first AP MLD is a holder of a TXOP: then the non-AP MLD may transmit a first PPDU to the first AP MLD via the third link at a first time; transmit request information to the first AP MLD, wherein the request information is used to request a link switch and indicates the second AP MLD as the AP MLD to switch to; and receive a second PPDU transmitted by the second AP MLD via the fourth link based on the shared TXOP, and disconnect the third link. In this way, link switching for the non-AP MLD during roaming does not need to be performed through a Link Reconfiguration mechanism, thereby achieving uninterrupted roaming.

Some exemplary embodiments of the present disclosure are provided below from the perspective of a non-collocated AP MLD. It is to be understood that these embodiments are provided for illustrative purposes only. Those skilled in the art, with the benefit of the description and teachings herein, can devise any suitable modifications, additions, deletions, variations, and/or combinations for these embodiments to readily obtain equivalent implementations thereof.

According to some embodiments of the present disclosure, if a non-AP MLD establishes a third link and a fourth link with a first AP MLD and a second AP MLD in a non-collocated AP MLD, respectively, the third link and the fourth link have the same Link ID, and the non-AP MLD is a holder of a TXOP: then, for the non-collocated AP MLD, a first PPDU may be received by the first AP MLD via the third link at a first time; and a second PPDU may be received by the second AP MLD via the fourth link at a second time subsequent to the first time, and the third link is disconnected. In this way, link switching for the non-AP MLD during roaming does not need to be performed through a Link Reconfiguration mechanism, thereby achieving uninterrupted roaming.

According to some embodiments of the present disclosure, if a non-AP MLD establishes a third link and a fourth link with a first AP MLD and a second AP MLD in a non-collocated AP MLD, respectively, the third link and the fourth link have the same Link ID, and the first AP MLD is a holder of a TXOP: then, for the non-collocated AP MLD, a first PPDU may be received by the first AP MLD via the third link at a first time; request information may be received by the first AP MLD from the non-AP MLD, wherein the request information is used to request a link switch and to request the first AP MLD to share the TXOP with the non-AP MLD; and after the first AP MLD shares the TXOP with the non-AP MLD, a second PPDU is received by the second AP MLD via the fourth link, and the third link is disconnected. In this way, link switching for the non-AP MLD during roaming does not need to be performed through a Link Reconfiguration mechanism, thereby achieving uninterrupted roaming.

According to some embodiments of the present disclosure, if a non-AP MLD establishes a third link and a fourth link with a first AP MLD and a second AP MLD in a non-collocated AP MLD, respectively, the third link and the fourth link have the same Link ID, and the first AP MLD is a holder of a TXOP: then at a first time, a first PPDU may be received by the first AP MLD via the third link (e.g., from the first AP MLD of the non-collocated AP MLD); request information is received by the first AP MLD from the non-AP MLD, wherein the request information is used to request a link switch and indicates the second AP MLD as the AP MLD to switch to; and after the first AP MLD shares the TXOP with the second AP MLD, a second PPDU is transmitted by the second AP MLD to the non-AP MLD based on the shared TXOP, and the third link is disconnected. In this way, link switching for the non-AP MLD during roaming does not need to be performed through a Link Reconfiguration mechanism, thereby achieving uninterrupted roaming.

### Definition of Virtual AP MLD Architecture and Function:

FIG. 14 illustrates a schematic diagram of a virtual AP MLD architecture according to some embodiments of the present disclosure. As shown, a virtual access point multi-link device (Virtual AP MLD) architecture proposed in the present disclosure is depicted. According to one or more embodiments of the present disclosure, the virtual AP MLD architecture includes affiliated access points (APs) of multiple collocated AP MLDs. For example, a collocated AP MLD 1 has affiliated AP 1, AP 2, and AP 3, while a collocated AP MLD 2 has affiliated AP 1, AP 2, and AP 3, and so on. The virtual AP MLD includes an upper layer Medium Access Control (Upper MAC), which can be located on a separate device (e.g., a controller) or on any of the included AP MLDs, for managing and controlling the lower layer MACs of the affiliated APs.

It is to be noted that although FIG. 14 illustrates a virtual AP MLD including a total of six affiliated APs from two collocated AP MLDs (i.e., three affiliated APs 1, 2, and 3 of AP MLD 1 and three affiliated APs 1, 2, and 3 of AP MLD 2), this is provided for illustrative purposes only. As would be readily understood by one skilled in the art throughout this disclosure, a virtual AP MLD architecture may include any suitable number of affiliated APs, and/or each collocated AP MLD may include any suitable number of affiliated APs (e.g., each collocated AP MLD may include a different number of affiliated APs), according to actual scenarios and/or needs. The present disclosure imposes no limitation in this regard.

In addition, regarding the non-AP MLD, although FIG. 14 illustrates that non-AP MLD 1 includes three non-access point stations (non-AP STAs), this is also provided for illustrative purposes only. As would be readily understood by one skilled in the art throughout this disclosure, a non-AP MLD can include any suitable number of non-AP STAs according to actual scenarios and/or needs, and the present disclosure imposes no limitation in this regard.

For the behavior on the virtual AP MLD side of the virtual AP MLD architecture, the following exemplary rules may apply.

According to one or more embodiments of the present disclosure, each virtual AP MLD may have a MAC address, while each affiliated AP may also have a separate MAC address. The virtual AP MLD identifies each affiliated AP by the MAC address of the affiliated AP.

According to one or more embodiments of the present disclosure, the virtual AP MLD unifies (i.e., virtualizes) all affiliated APs that it manages and controls operating in the same frequency band into a single affiliated AP. For example, referring to FIG. 14, affiliated AP 1 of AP MLD 1 and affiliated AP 1 of AP MLD 2, which operate in the 2.4 GHz frequency band, are unified (i.e., virtualized) into affiliated AP 1; affiliated AP 2 of AP MLD 1 and affiliated AP 2 of AP MLD 2, which operate in the 5 GHz frequency band, are unified (i.e., virtualized) into affiliated AP 2; and affiliated AP 3 of AP MLD 1 and affiliated AP 3 of AP MLD 2, which operate in the 6 GHz frequency band, are unified (i.e., virtualized) into affiliated AP 3.

According to one or more embodiments of the present disclosure, the Upper MAC of the virtual AP MLD is responsible for traffic identifier-to-link (TID-to-Link) mapping, that is, mapping TIDs to different links corresponding to different affiliated APs.

According to one or more embodiments of the present disclosure, a non-AP MLD can request to associate with the virtual AP MLD through any affiliated AP of the virtual AP MLD, without needing to re-initiate an association request for each affiliated AP.

For the behavior on the non-AP MLD side of the virtual AP MLD architecture, the following exemplary rules may apply.

According to one or more embodiments of the present disclosure, a non-AP MLD can identify the virtual AP MLD and its affiliated APs operating in different frequency bands only by using the multi-link capability information carried in relevant frames (e.g., including but not limited to beacon frames, probe response frames, etc.) transmitted by the virtual AP MLD.

According to an embodiment of the present disclosure, the non-AP MLD cannot distinguish between affiliated APs operating in the same frequency band. For example, continuing the above example, the non-AP MLD is only aware that the virtual AP MLD has one affiliated AP 1 operating in the 2.4 GHz frequency band, one affiliated AP 2 operating in the 5 GHz frequency band, and one affiliated AP 3 operating in the 6 GHz frequency band.

According to one or more embodiments of the present disclosure, when a non-AP MLD transmits a frame to the virtual AP MLD, the receiver address (RA) of the frame can be populated with the MAC address of an affiliated AP, without needing to specify which AP MLD the affiliated AP belongs to.

This facilitates unified management and control of the affiliated APs, enhances the flexibility and efficiency of the virtual AP MLD architecture, and simplifies the association process between the non-AP MLD and the virtual AP MLD.

### Method for a non-AP MLD to discover a virtual AP MLD:

According to one or more embodiments of the present disclosure, a non-AP MLD can discover a virtual AP MLD that supports multi-link capabilities by receiving relevant frames (e.g., including but not limited to beacon frames and/or Unsolicited Probe Response frames) transmitted by an affiliated AP of the virtual AP MLD.

According to one or more embodiments of the present disclosure, a non-AP MLD can discover a virtual AP MLD that supports multi-link capabilities by transmitting a Multi-Link (ML) Probe Request frame to the virtual AP MLD or to an affiliated AP of the virtual AP MLD, and then receiving an ML Probe Response frame transmitted by an affiliated AP of the virtual AP MLD.

Specifically, for the non-AP MLD, the following two exemplary methods may be used to discover a virtual AP MLD.

### Option 1: Passive discovery method

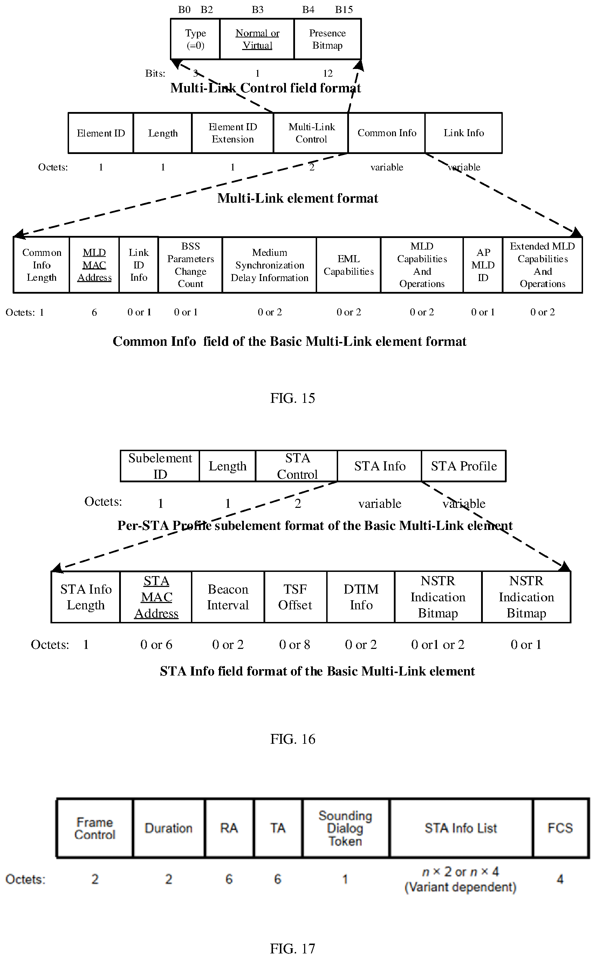

FIG. 15 illustrates the format of an exemplary multi-link element in a virtual AP MLD framework according to some embodiments of the present disclosure. As shown, a virtual AP MLD can add a Basic Multi-Link element to the relevant frames it transmits (e.g., including but not limited to, beacon frames and/or Unsolicited Probe Response frames).

According to one or more embodiments of the present disclosure, the Basic Multi-Link element may be used to carry multi-link related information of the virtual AP MLD.

For example, when the Type field of the Multi-Link Control field in the exemplary multi-link element is set to 0, this may indicate that the multi-link element is a Basic Multi-Link element.

As an example and not a limitation, as shown in FIG. 15, octet 3 of the Multi-Link Control field in the Basic Multi-Link element can be defined to indicate 'normal' or 'virtual', to specify whether the AP MLD corresponding to the current Basic Multi-Link element is a normal, 802.11be-compliant AP MLD or a virtual AP MLD (e.g., one that can support 802.11bn and later standards).

Exemplarily, when "Normal or Virtual" = 0, it may indicate that the AP MLD indicated by the current Basic Multi-Link element is an 802.11be-compliant (non-collocated) AP MLD.

Exemplarily, when "Normal or Virtual" = 1, it may indicate that the AP MLD indicated by the current Basic Multi-Link element is a virtual AP MLD.

Optionally, as an example and not a limitation, when "Normal or Virtual" = 1, the MLD MAC Address field of the Common Info field of the Basic Multi-Link element indicates the MAC address of the virtual AP MLD.

FIG. 16 illustrates a format of a Per-STA Profile subelement of an exemplary Basic Multi-Link element according to some embodiments of the present disclosure.

According to one or more embodiments of the present disclosure, the Link Info field of the Basic Multi-Link element may include one or more Per-STA Profile subelements for carrying information about affiliated APs supported by the current virtual AP MLD, as shown in FIG. 16.

Exemplarily, when the STA MAC Address Present bit of the STA Control field is set to 1, it may indicate that an STA MAC address field exists in the STA Info field of the Per-STA Profile subelement, and the STA MAC address field can be used to indicate the MAC address of an affiliated AP of the virtual AP MLD.

According to this embodiment, after a non-AP MLD receives a relevant frame (for example, including but not limited to a beacon frame and/or an unsolicited probe response frame) carrying the above-described Basic Multi-Link element sent by a virtual AP MLD, the non-AP MLD confirms that the current AP MLD is a virtual AP MLD by checking octet 3 in the Multi-Link Control field, i.e., "Normal or Virtual" = 1. Then, the MAC address of the current virtual AP MLD can be obtained through the MLD MAC Address field in the Common Info field, and relevant information about the affiliated APs of the current virtual AP MLD can be obtained through the Link Info field.

This enables the non-AP MLD to identify whether the AP MLD is a virtual AP MLD and obtain the attributes of the virtual AP MLD by receiving and parsing a relevant frame sent by the AP MLD, thereby facilitating further interoperability with and management of the virtual AP MLD.

### Option 2: Active discovery method

According to one or more embodiments of the present disclosure, a non-AP MLD can also actively transmit an ML Probe Request frame carrying a Probe Request Multi-Link element to a virtual AP MLD.

Exemplarily, when the Type field in the Multi-Link Control field of the multi-link element is set to 1, it may indicate that the multi-link element is a Probe Request Multi-Link element.

Exemplarily, the Address 1 field of the ML Probe Request frame can be set to a broadcast address, and the Address 3 field can be set to the Basic Service Set Identifier (BSSID) of the virtual AP MLD; or both the Address 1 field and the Address 3 field of the ML Probe Request frame are set to the BSSID of the virtual AP MLD.

Then, the virtual AP MLD sends an ML Probe Response frame carrying a Basic Multi-Link element to the non-AP MLD as a reply. The specific content and parameter settings of the Basic Multi-Link element may be consistent with those in Option 1 and will not be described again here.

Some exemplary embodiments of the present disclosure are provided below from the perspective of a non-AP MLD. It is to be understood that these embodiments are provided for illustrative purposes only. Those skilled in the art, with the benefit of the description and teachings herein, can devise any suitable modifications, additions, deletions, variations, and/or combinations for these embodiments to readily obtain equivalent implementations thereof.

According to some embodiments of the present disclosure, before a non-AP MLD transmits an association request frame to a virtual AP MLD, the non-AP MLD may receive a frame carrying a Basic Multi-Link element from the virtual AP MLD. Exemplarily, the Basic Multi-Link element may include a Multi-Link Control field, and the Multi-Link Control field may indicate whether an AP MLD corresponding to the Basic Multi-Link element is an 802.11be-compliant AP MLD or a virtual AP MLD.

According to some embodiments of the present disclosure, when a value of a preset bit of the Multi-Link Control field is a preset value, it may indicate that the AP MLD corresponding to the Basic Multi-Link element is an 802.11be-compliant AP MLD, and when the value of the preset bit of the Multi-Link Control field is another preset value, it may indicate that the AP MLD corresponding to the Basic Multi-Link element is a virtual AP MLD. This provides an effective means for a non-AP MLD to passively discover a virtual AP MLD that supports multi-link capabilities.

According to some embodiments of the present disclosure, before the non-AP MLD transmits an association request frame to the virtual AP MLD, the non-AP MLD may transmit an ML Probe Request frame carrying a Probe Request Multi-Link element to the virtual AP MLD, and receive an ML Probe Response frame from the virtual AP MLD. The ML Probe Response frame is transmitted by the virtual AP MLD in response to the ML Probe Request frame. Exemplarily, the ML Probe Response frame may carry a Basic Multi-Link element, the Basic Multi-Link element may include a Multi-Link Control field, and the Multi-Link Control field may indicate whether an AP MLD corresponding to the Basic Multi-Link element is an 802.11be-compliant AP MLD or a virtual AP MLD.

According to some embodiments of the present disclosure, when a value of a preset bit of the Multi-Link Control field is a preset value, it may indicate that the AP MLD corresponding to the Basic Multi-Link element is an 802.11be-compliant AP MLD, and when the value of the preset bit of the Multi-Link Control field is another preset value, it may indicate that the AP MLD corresponding to the Basic Multi-Link element is a virtual AP MLD. This provides an effective means for a non-AP MLD to actively discover a virtual AP MLD that supports multi-link capabilities.

Some exemplary embodiments of the present disclosure are provided below from the perspective of a virtual AP MLD. It is to be understood that these embodiments are provided for illustrative purposes only. Those skilled in the art, with the benefit of the description and teachings herein, can devise any suitable modifications, additions, deletions, variations, and/or combinations for these embodiments to readily obtain equivalent implementations thereof.

According to some embodiments of the present disclosure, before the virtual AP MLD receives an association request frame from a non-AP MLD, the virtual AP MLD may transmit a frame carrying a Basic Multi-Link element to the non-AP MLD. Exemplarily, the Basic Multi-Link element may include a Multi-Link Control field, and the Multi-Link Control field may indicate whether an AP MLD corresponding to the Basic Multi-Link element is an 802.11be-compliant AP MLD or a virtual AP MLD.

According to some embodiments of the present disclosure, when a value of a preset bit of the Multi-Link Control field is a preset value, it may indicate that the AP MLD corresponding to the Basic Multi-Link element is an 802.11be-compliant AP MLD, and when the value of the preset bit of the Multi-Link Control field is another preset value, it may indicate that the AP MLD corresponding to the Basic Multi-Link element is a virtual AP MLD. This provides an effective means for a non-AP MLD to passively discover a virtual AP MLD that supports multi-link capabilities.

According to some embodiments of the present disclosure, before the virtual AP MLD receives an association request frame from a non-AP MLD, the virtual AP MLD may receive an ML Probe Request frame carrying a Probe Request Multi-Link element from the non-AP MLD, and transmit an ML Probe Response frame to the non-AP MLD, wherein the ML Probe Response frame is transmitted by the virtual AP MLD in response to the ML Probe Request frame. Exemplarily, the ML Probe Response frame may carry a Basic Multi-Link element, the Basic Multi-Link element may include a Multi-Link Control field, and the Multi-Link Control field may indicate whether an AP MLD corresponding to the Basic Multi-Link element is an 802.11be-compliant AP MLD or a virtual AP MLD.

According to some embodiments of the present disclosure, when a value of a preset bit of the Multi-Link Control field is a preset value, it may indicate that the AP MLD corresponding to the Basic Multi-Link element is an 802.11be-compliant AP MLD, and when the value of the preset bit of the Multi-Link Control field is another preset value, it may indicate that the AP MLD corresponding to the Basic Multi-Link element is a virtual AP MLD. This provides an effective means for a non-AP MLD to actively discover a virtual AP MLD that supports multi-link capabilities.

### Method for a non-AP MLD to associate with a virtual AP MLD and establish a multi-link:

Under the virtual AP MLD framework, when a non-AP MLD requests to establish an association and a multi-link with a virtual AP MLD, it is not necessary to include a corresponding Basic Multi-Link element for each AP MLD to indicate information about the link requested to be established with that AP MLD; it is sufficient to include only one Basic Multi-Link element.

According to one or more embodiments of the present disclosure, the Link Info field in the Basic Multi-Link element in an Association Request frame sent by a non-AP MLD can be used to indicate information about the affiliated APs with which the non-AP MLD requests to establish links (i.e., the affiliated APs that are transparent to the non-AP MLD and with which the non-AP MLD expects to establish a link).

After receiving the Association Request frame sent by the non-AP MLD, the virtual AP MLD indicates in its response whether to accept the association request of the non-AP MLD and/or whether to agree to establish a multi-link with the non-AP MLD.

Some exemplary embodiments of the present disclosure are provided below from the perspective of a non-AP MLD. It is to be understood that these embodiments are provided for illustrative purposes only. Those skilled in the art, with the benefit of the description and teachings herein, can devise any suitable modifications, additions, deletions, variations, and/or combinations for these embodiments to readily obtain equivalent implementations thereof.

According to some embodiments of the present disclosure, a wireless communication method for a non-access point multi-link device (non-AP MLD) is provided. The method may include: transmitting an association request frame to a virtual access point multi-link device (virtual AP MLD). Exemplarily, the virtual AP MLD may include a plurality of AP MLDs, each AP MLD may include a plurality of access points (APs), and one or more APs operating in a same frequency band among all the APs may be unified by the virtual AP MLD into a unique affiliated AP. Exemplarily, the association request frame may be used for the non-AP MLD to make an association request to the virtual AP MLD, so that the non-AP MLD is associated with the virtual AP MLD. The method may also include receiving an association response frame from the virtual AP MLD, wherein the association response frame is sent by the virtual AP MLD in response to the association request frame.

This allows the non-AP MLD to request association with the virtual AP MLD through any affiliated AP of the virtual AP MLD, without needing to re-initiate an association request for each affiliated AP. When the non-AP MLD transmits a frame to the virtual AP MLD, the receiver address (RA) of the frame can be populated with the MAC address of an affiliated AP, without needing to specify which AP MLD the affiliated AP belongs to. This helps to achieve unified management and control of the affiliated APs, enhances the flexibility and efficiency of the virtual AP MLD architecture, and at the same time simplifies the association process between the non-AP MLD and the virtual AP MLD, saving signaling overhead and greatly improving communication efficiency.

According to some embodiments of the present disclosure, the non-AP MLD associating with the virtual AP MLD may include the non-AP MLD establishing a multi-link with the virtual AP MLD.

According to some embodiments of the present disclosure, the association request frame may include only one Basic Multi-Link element, and a link information field in the Basic Multi-Link element may be used to indicate information about at least one unique affiliated AP corresponding to the multi-link.

According to some embodiments of the present disclosure, the above-described method may further include: receiving an association response frame from the virtual AP MLD, wherein the association response frame is sent by the virtual AP MLD in response to receiving the association request frame from the non-AP MLD. Exemplarily, the association response frame may indicate whether the association request of the non-AP MLD is accepted and/or whether establishing the multi-link with the non-AP MLD is permitted.

Some exemplary embodiments of the present disclosure are provided below from the perspective of a virtual AP MLD. It is to be understood that these embodiments are provided for illustrative purposes only. Those skilled in the art, with the benefit of the description and teachings herein, can devise any suitable modifications, additions, deletions, variations, and/or combinations for these embodiments to readily obtain equivalent implementations thereof.

According to some embodiments of the present disclosure, a wireless communication method for a virtual access point multi-link device (virtual AP MLD) is provided. The method may include: receiving an association request frame from a non-access point multi-link device (non-AP MLD). Exemplarily, the virtual AP MLD may include a plurality of AP MLDs, each AP MLD may include a plurality of access points (APs), and one or more APs operating in a same frequency band among all the APs may be unified by the virtual AP MLD into a unique affiliated AP. Exemplarily, the association request frame may be used for the non-AP MLD to make an association request to the virtual AP MLD, so that the non-AP MLD is associated with the virtual AP MLD. The method may also include sending an association response frame to the non-AP MLD in response to the association request frame.

Thereby, a non-AP MLD can request association with the virtual AP MLD through any affiliated AP of the virtual AP MLD, without needing to re-initiate an association request for each affiliated AP. When the non-AP MLD transmits a frame to the virtual AP MLD, the receiver address (RA) of the frame can be populated with the MAC address of an affiliated AP, without needing to specify which AP MLD the affiliated AP belongs to. This facilitates unified management and control of the affiliated APs, enhances the flexibility and efficiency of the virtual AP MLD architecture, simplifies the association process between the non-AP MLD and the virtual AP MLD, saves signaling overhead, and greatly improves communication efficiency.

According to some embodiments of the present disclosure, association of a non-AP MLD with the virtual AP MLD may include the non-AP MLD establishing a multi-link with the virtual AP MLD.

According to some embodiments of the present disclosure, the association request frame may include only one basic multi-link element, and a link information field in the basic multi-link element may be used to indicate information of at least one unique affiliated AP corresponding to the multi-link.

According to some embodiments of the present disclosure, the method described above may further include transmitting an association response frame to the non-AP MLD, wherein the association response frame is sent by the virtual AP MLD in response to receiving the association request frame from the non-AP MLD. Exemplarily, the association response frame may indicate whether the association request of the non-AP MLD is accepted and/or whether establishment of the multi-link with the non-AP MLD is granted.

### Method for mapping different services to different links between a non-AP MLD and a virtual AP MLD through a TID-to-Link mapping mechanism:

Since a virtual AP MLD can be analogized to a collocated AP MLD in the 802.11be standard to some extent, the individual AP MLDs under the virtual AP MLD are transparent to the non-AP MLD. Therefore, the TID-to-Link mapping mechanism between the non-AP MLD and the virtual AP MLD can remain consistent with the 802.11be standard, enabling the mapping of a TID to the link corresponding to the respective affiliated AP of the virtual AP MLD without additional changes.

Thereby, the non-AP MLD can use a TID-to-Link mapping mechanism consistent with the 802.11be standard to map a traffic identifier (TID) to the link corresponding to the respective affiliated AP in the virtual AP MLD. The transparency of the AP MLDs under the virtual AP MLD and the TID-to-Link mapping mechanism consistent with existing standards ensure communication efficiency between the non-AP MLD and the virtual AP MLD without requiring additional adjustments or changes, thus providing strong compatibility.

Some exemplary embodiments of the present disclosure are provided below from the perspective of a non-AP MLD. It is to be understood that these embodiments are provided for illustrative purposes only. Those skilled in the art, with the benefit of the description and teachings herein, can devise any suitable modifications, additions, deletions, variations, and/or combinations for these embodiments to readily obtain equivalent implementations thereof.

According to some embodiments of the present disclosure, the wireless communication method for a non-access point multi-link device (non-AP MLD) described above may further include: receiving, from the virtual AP MLD, a TID-to-Link mapping response frame for a traffic identifier-to-link (TID-to-Link) mapping, wherein the TID-to-Link mapping response frame may be transmitted by the virtual AP MLD in response to receiving a TID-to-Link mapping request frame from the non-AP MLD. Exemplarily, the TID-to-Link mapping request frame may include a first number of TID-to-Link mapping elements, and the TID-to-Link mapping response frame may include a second number of TID-to-Link mapping elements. Exemplarily, the second number may be the same as or different from the first number. For example, when the virtual AP MLD grants the establishment of all requested multi-links, the first number may be equal to the second number, whereas when the virtual AP MLD grants the establishment of a part of the requested multi-links, the first number may not be equal to the second number (for example, the second number is smaller than the first number). Exemplarily, when not relying on the Status Code field in the Per-STA Profile subelement, a non-collocated AP MLD may not reply in the request response frame with the TID-to-Link mapping element corresponding to the AP MLD that carries the link requested by the non-AP MLD, which can cause the second number to be different from the first number. Thereby, services can be mapped to different links simply and efficiently.

According to some embodiments of the present disclosure, the association request frame may include a first number of TID-to-Link mapping elements for a traffic identifier-to-link (TID-to-Link) mapping, and the association response frame may include a second number of TID-to-Link mapping elements. Exemplarily, the second number may be the same as or different from the first number. For example, when the virtual AP MLD grants the establishment of all requested multi-links, the first number may be equal to the second number, whereas when the virtual AP MLD grants the establishment of a part of the requested multi-links, the first number may not be equal to the second number (for example, the second number is smaller than the first number). For example, when not relying on the Status Code field in the Per-STA Profile subelement, a non-collocated AP MLD may not reply in the request response frame with the TID-to-Link mapping element corresponding to the AP MLD that carries the link requested by the non-AP MLD, which can cause the second number to be different from the first number. Thereby, services can be mapped to different links simply and efficiently.

According to some embodiments of the present disclosure, the method described above may further include: receiving, from the virtual AP MLD, a second frame different from the association response frame, wherein the second frame may include a TID-to-Link mapping element for a traffic identifier-to-link (TID-to-Link) mapping. Thereby, services can be mapped to different links in a mandatory manner simply and efficiently.

Some exemplary embodiments of the present disclosure are provided below from the perspective of a virtual AP MLD. It is to be understood that these embodiments are provided for illustrative purposes only. Those skilled in the art, with the benefit of the description and teachings herein, can devise any suitable modifications, additions, deletions, variations, and/or combinations for these embodiments to readily obtain equivalent implementations thereof.

According to some embodiments of the present disclosure, the wireless communication method for a virtual access point multi-link device (virtual AP MLD) described above may further include: transmitting, to the non-AP MLD, a TID-to-Link mapping response frame for a traffic identifier-to-link (TID-to-Link) mapping, wherein the TID-to-Link mapping response frame may be transmitted by the virtual AP MLD in response to receiving a TID-to-Link mapping request frame from the non-AP MLD. Exemplarily, the TID-to-Link mapping request frame includes a first number of TID-to-Link mapping elements, and the TID-to-Link mapping response frame includes a second number of TID-to-Link mapping elements. Exemplarily, the second number may be the same as or different from the first number. For example, when the virtual AP MLD grants the establishment of all requested multi-links, the first number may be equal to the second number, whereas when the virtual AP MLD grants the establishment of a part of the requested multi-links, the first number may not be equal to the second number (for example, the second number is smaller than the first number). For example, when not relying on the Status Code field in the Per-STA Profile subelement, a non-collocated AP MLD may not reply in the request response frame with the TID-to-Link mapping element corresponding to the AP MLD that carries the link requested by the non-AP MLD, which can cause the second number to be different from the first number. Thereby, services can be mapped to different links simply and efficiently.

According to some embodiments of the present disclosure, the association request frame may include a first number of TID-to-Link mapping elements for a traffic identifier-to-link (TID-to-Link) mapping, and the association response frame may include a second number of TID-to-Link mapping elements. Exemplarily, the second number may be the same as or different from the first number. For example, when the virtual AP MLD grants the establishment of all requested multi-links, the first number may be equal to the second number, whereas when the virtual AP MLD grants the establishment of a part of the requested multi-links, the first number may not be equal to the second number (for example, the second number is smaller than the first number). For example, when not relying on the Status Code field in the Per-STA Profile subelement, a non-collocated AP MLD may not reply in the request response frame with the TID-to-Link mapping element corresponding to the AP MLD that carries the link requested by the non-AP MLD, which can cause the second number to be different from the first number. Thereby, services can be mapped to different links simply and efficiently.

According to some embodiments of the present disclosure, the method described above may further include: transmitting, to the non-AP MLD, a second frame different from the association response frame, wherein the second frame may include a TID-to-Link mapping element for a traffic identifier-to-link (TID-to-Link) mapping. Thereby, services can be mapped to different links in a mandatory manner simply and efficiently.

### Method for performing channel sounding between a non-AP MLD and a virtual AP MLD:

When channel sounding is performed between a non-AP MLD and a virtual AP MLD, from the perspective of the virtual AP MLD, it can decide which subordinate AP MLD's affiliated AP to use for sending a null data packet (NDP) frame for channel sounding. However, from the perspective of the non-AP MLD, it can only identify which affiliated AP of the virtual AP MLD the NDP frame comes from, but does not know which AP MLD this affiliated AP belongs to, because for the non-AP MLD, the AP MLDs under the virtual AP MLD are transparent (in other words, the AP MLDs under the virtual AP MLD can be considered non-existent for the non-AP MLD).

For example, as shown in FIG. 14, when the virtual AP MLD and the non-AP MLD perform channel sounding on link 1, the virtual AP MLD may, for example, choose to use affiliated AP 1 of AP MLD 1 to send an NDP frame for channel sounding. However, for the non-AP MLD, it only knows that the NDP frame comes from affiliated AP 1 of the virtual AP MLD, but does not know from which specific AP MLD's affiliated AP 1 the NDP frame comes.

FIG. 17 illustrates a format of an exemplary null data packet announcement (NDPA) frame according to some embodiments of the present disclosure.

According to one or more embodiments of the present disclosure, channel sounding between a non-AP MLD and a virtual AP MLD can be implemented as follows: the non-AP MLD only needs to feed back a channel sounding result (i.e., a channel state information (CSI) report) on the link on which the virtual AP MLD sent the NDPA frame and the NDP frame. After receiving the CSI report, the virtual AP MLD matches the transmitter and receiver based on the sequence in which the NDPA frame and NDP frame were previously sent (such as the Sounding Dialog Token field of the NDPA frame as shown in FIG. 17) (i.e., which AP MLD's affiliated AP sent the NDP frame, and which non-AP MLD's affiliated non-AP STA received the NDP frame).

Of course, in addition to the Sounding Dialog Token shown in FIG. 17, those skilled in the art will readily appreciate that any other suitable element for indicating the sequence in which the virtual AP MLD sends the NDPA frame and the NDP frame is also feasible, and the present disclosure does not impose any limitation in this regard.

Some exemplary embodiments of the present disclosure are provided below from the perspective of a non-AP MLD. It is to be understood that these embodiments are provided for illustrative purposes only. Those skilled in the art, with the benefit of the description and teachings herein, can devise any suitable modifications, additions, deletions, variations, and/or combinations for these embodiments to readily obtain equivalent implementations thereof.

According to some embodiments of the present disclosure, the wireless communication method for a non-access point multi-link device (non-AP MLD) described above may further include: receiving a null data packet announcement (NDPA) frame and a null data packet (NDP) frame from the virtual AP MLD; and in response to receiving the NDPA frame and the NDP frame, transmitting a channel state information (CSI) report for a link to the virtual AP MLD via the link on which the NDPA frame and the NDP frame were transmitted. Thereby, channel sounding between the non-AP MLD and the virtual AP MLD can be performed in a simple and efficient manner.

Some exemplary embodiments of the present disclosure are provided below from the perspective of a virtual AP MLD. It is to be understood that these embodiments are provided for illustrative purposes only. Those skilled in the art, with the benefit of the description and teachings herein, can devise any suitable modifications, additions, deletions, variations, and/or combinations for these embodiments to readily obtain equivalent implementations thereof.

According to some embodiments of the present disclosure, the wireless communication method for a virtual access point multi-link device (virtual AP MLD) described above may further include: transmitting a null data packet announcement (NDPA) frame and a null data packet (NDP) frame to the non-AP MLD; and receiving a channel state information (CSI) report for a link from the non-AP MLD via the link on which the NDPA frame and the NDP frame were transmitted. Thereby, channel sounding between the non-AP MLD and the virtual AP MLD can be performed in a simple and efficient manner.

### Method for performing MCS indication between a non-AP MLD and a virtual AP MLD:

After channel sounding is performed between the non-AP MLD and the virtual AP MLD as described above, both parties can select an appropriate modulation and coding scheme (MCS) and/or transmission parameter configuration for data transmission based on the channel sounding results. In some situations, the channel conditions between the affiliated APs of different AP MLDs under the virtual AP MLD and the affiliated non-AP STAs of the non-AP MLD may be different. Therefore, it is necessary to select different MCSs and/or transmission parameter configurations for data transmission based on the corresponding channel sounding results.

For example, as shown in FIG. 14, the channel state between affiliated AP 1 of AP MLD 1 under the virtual AP MLD and affiliated non-AP STA 1 of non-AP MLD 1 may be different from the channel state between affiliated AP 1 of AP MLD 2 under the virtual AP MLD and affiliated non-AP STA 1 of non-AP MLD 1. In this case, when link 1 is used for data communication between the virtual AP MLD and the non-AP STA, different MCSs and/or transmission parameter configurations should be selected according to the different affiliated APs of the virtual AP MLD that perform the data transmission.

Exemplarily, and with reference to FIG. 14, an exemplary operation for MCS indication between a non-AP MLD and a virtual AP MLD may include:
1) The virtual AP MLD uses affiliated AP 1 of a certain AP MLD (e.g., AP MLD 1) to perform channel sounding with affiliated non-AP STA 1 of non-AP MLD 1 on link 1;
2) Affiliated non-AP STA 1 of non-AP MLD 1 feeds back the channel sounding results to the virtual AP MLD on link 1;
3) The virtual AP MLD confirms, based on the sequence for performing the channel sounding (e.g., which can be indicated by the Sounding Dialog Token field of the NDPA frame in FIG. 17), the transmitter and receiver corresponding to the channel sounding results (e.g., the transmitter may be affiliated AP 1 of AP MLD 1 under the virtual AP MLD, instead of affiliated AP 1 of AP MLD 2 under the virtual AP MLD, and the receiver may be affiliated non-AP STA 1 of non-AP MLD 1), and calculates a suitable MCS and/or transmission parameter configuration;
4) The virtual AP MLD sends the MCS and/or transmission parameter configuration to affiliated non-AP STA 1 of non-AP MLD 1 via a relevant frame (e.g., a trigger frame);
5) Affiliated non-AP STA 1 of non-AP MLD 1 sends a (data) frame according to the MCS and/or transmission parameter configuration indicated by the virtual AP MLD.
6) The virtual AP MLD receives the (data) frame sent by non-AP MLD 1 using the corresponding receiver.

The above exemplary operation enables the virtual AP MLD to select a suitable MCS and/or transmission parameter configuration and perform effective data transmission with the non-AP MLD. Specifically, by allowing dynamic selection of an appropriate MCS and/or transmission parameter configuration based on different channel conditions, efficient data communication between the virtual AP MLD and the non-AP MLD is achieved. Therefore, data transmission performance can be optimized according to actual channel conditions, ensuring better transmission quality and data transmission rates under different channel conditions.

Some exemplary embodiments of the present disclosure are provided below from the perspective of a non-AP MLD. It is to be understood that these embodiments are provided for illustrative purposes only. Those skilled in the art, with the benefit of the description and teachings herein, can devise any suitable modifications, additions, deletions, variations, and/or combinations for these embodiments to readily obtain equivalent implementations thereof.

According to some embodiments of the present disclosure, the wireless communication method for a non-access point multi-link device (non-AP MLD) described above may further include: receiving a third frame carrying a modulation and coding scheme (MCS) from the virtual AP MLD, wherein the MCS is obtained based on a CSI report; and transmitting a data frame to the virtual AP MLD on the link based on the MCS. Thereby, MCS indication between the non-AP MLD and the virtual AP MLD can be performed in a simple and efficient manner.

Some exemplary embodiments of the present disclosure are provided below from the perspective of a virtual AP MLD. It is to be understood that these embodiments are provided for illustrative purposes only. Those skilled in the art, with the benefit of the description and teachings herein, can devise any suitable modifications, additions, deletions, variations, and/or combinations for these embodiments to readily obtain equivalent implementations thereof.

According to some embodiments of the present disclosure, the wireless communication method for a virtual access point multi-link device (virtual AP MLD) described above may further include: transmitting a third frame carrying a modulation and coding scheme (MCS) to the non-AP MLD, wherein the MCS is obtained based on a CSI report; and receiving a data frame of the non-AP MLD via the link, wherein the data frame is configured by the non-AP MLD based on the MCS. Thereby, MCS indication between the non-AP MLD and the virtual AP MLD can be performed in a simple and efficient manner.

Rules for multi-link cooperative transmission between a non-AP MLD and a virtual AP MLD:

As shown in FIG. 14, transmission between a non-AP MLD and a virtual AP MLD can be performed over multiple links, but based on research of the prior art, multi-link transmission between a non-AP MLD and a virtual AP MLD needs to follow some rules. Exemplary rules include but are not limited to:
1) In a frame sent by the virtual AP MLD, the receiver address (RA) is set to a specific affiliated non-AP STA of the non-AP MLD, and the transmitter address (TA) is set to a specific affiliated AP of the virtual AP MLD.
2) In a frame sent by the non-AP MLD, the receiver address (RA) is set to a specific affiliated AP of the virtual AP MLD, and the transmitter address (TA) is set to a specific affiliated non-AP STA of the non-AP MLD.

Through such exemplary rules, it is ensured that after a specific affiliated AP of the virtual AP MLD receives a frame, the frame will be passed to the Upper MAC of the virtual AP MLD.

Some exemplary embodiments of the present disclosure are provided below from the perspective of a non-AP MLD. It is to be understood that these embodiments are provided for illustrative purposes only. Those skilled in the art, with the benefit of the description and teachings herein, can devise any suitable modifications, additions, deletions, variations, and/or combinations for these embodiments to readily obtain equivalent implementations thereof.

According to some embodiments of the present disclosure, for a frame transmitted by the non-AP MLD to the virtual AP MLD, a receiver address of the frame is a medium access control (MAC) address of an affiliated AP of the virtual AP MLD, and a transmitter address of the frame is a MAC address of a non-access point station (non-AP STA) of the non-AP MLD. Thereby, because the AP MLDs under the virtual AP MLD are transparent to the non-AP MLD, signaling overhead is saved.

Some exemplary embodiments of the present disclosure are provided below from the perspective of a virtual AP MLD. It is to be understood that these embodiments are provided for illustrative purposes only. Those skilled in the art, with the benefit of the description and teachings herein, can devise any suitable modifications, additions, deletions, variations, and/or combinations for these embodiments to readily obtain equivalent implementations thereof.

According to some embodiments of the present disclosure, for a frame transmitted by the virtual AP MLD to the non-AP MLD, a receiver address of the frame is a medium access control (MAC) address of a non-access point station (non-AP STA) of the non-AP MLD, and a transmitter address of the frame is a MAC address of an affiliated AP of the virtual AP MLD. Thereby, because the AP MLDs under the virtual AP MLD are transparent to the non-AP MLD, signaling overhead is saved.

### Method for a non-AP MLD to perform seamless roaming under a virtual AP MLD framework:

Given the virtual AP MLD architecture shown in FIG. 14 and the aforementioned rules, exemplary steps for a non-AP MLD to switch links when moving may include:
(1) At time Tᵢ, affiliated non-AP STA 1 of non-AP MLD 1 sends a physical layer protocol data unit (PPDU) i (or Data i) to affiliated AP 1 of the virtual AP MLD via link 1 (it should be noted that the one actually receiving this PPDU is affiliated AP 1 of AP MLD 1 under the virtual AP MLD, although AP MLD 1 is transparent to non-AP MLD 1 and its affiliated non-AP STA 1);
(2) When non-AP MLD 1 moves away from the coverage area of AP MLD 1 and approaches the coverage area of AP MLD 2, at time Tᵢ₊₁, affiliated non-AP STA 1 of non-AP MLD 1 continues to send PPDU i+1 (or Data i+1) to affiliated AP 1 of the virtual AP MLD via link 1 (it should be noted that the one actually receiving this PPDU is affiliated AP 1 of AP MLD 2 under the virtual AP MLD, and no longer affiliated AP 1 of AP MLD 1);

In the above exemplary process, from the perspective of the virtual AP MLD, the affiliated AP serving the non-AP MLD has been switched (from affiliated AP 1 of AP MLD 1 to affiliated AP 1 of AP MLD 2). However, from the perspective of the non-AP MLD, it still maintains the connection of link 1 with the virtual AP MLD and is unaware that the affiliated AP has been switched, thus achieving seamless roaming for the non-AP MLD.

Thereby, seamless roaming of the non-AP MLD can be achieved without interrupting or re-establishing the connection with the virtual AP MLD, thus ensuring that the moving non-AP MLD can continuously communicate data with the virtual AP MLD, regardless of whether the affiliated AP is switched.

Through this technology, a continuous connection can be ensured and data transmission can be maintained without interruption when the non-AP MLD is moving, which improves the overall performance and stability of the mobile network, while reducing the impact of latency and disconnections, and achieving efficient data transmission with seamless roaming.

Some exemplary embodiments of the present disclosure are provided below from the perspective of a non-AP MLD. It is to be understood that these embodiments are provided for illustrative purposes only. Those skilled in the art, with the benefit of the description and teachings herein, can devise any suitable modifications, additions, deletions, variations, and/or combinations for these embodiments to readily obtain equivalent implementations thereof.

According to some embodiments of the present disclosure, when operating frequency bands of a first AP and a second AP in the virtual AP MLD are the same, the non-AP MLD can transmit a first physical layer protocol data unit (PPDU) to the first AP via a link at a first time point; and transmit a second PPDU to the second AP via the link at a second time point, wherein the second time point is later than the first time point. Although from the perspective of the virtual AP MLD, the affiliated AP serving the non-AP MLD is switched, from the perspective of the non-AP MLD, it still maintains the connection of the same link with the virtual AP MLD and is unaware that the affiliated AP has been switched, thereby achieving seamless roaming for the non-AP MLD and improving communication efficiency and stability.

Some exemplary embodiments of the present disclosure are provided below from the perspective of a virtual AP MLD. It is to be understood that these embodiments are provided for illustrative purposes only. Those skilled in the art, with the benefit of the description and teachings herein, can devise any suitable modifications, additions, deletions, variations, and/or combinations for these embodiments to readily obtain equivalent implementations thereof.

According to some embodiments of the present disclosure, when operating frequency bands of a first AP MLD and a second AP MLD of the virtual AP MLD are the same, the virtual AP MLD can transmit a first physical layer protocol data unit (PPDU) to the non-AP MLD via a link at a first time point; and transmit a second PPDU to the non-AP MLD via the link at a second time point, wherein the second time point is later than the first time point. Although from the perspective of the virtual AP MLD, the affiliated AP serving the non-AP MLD is switched, from the perspective of the non-AP MLD, it still maintains the connection of the same link with the virtual AP MLD and is unaware that the affiliated AP has been switched, thereby achieving seamless roaming for the non-AP MLD and improving communication efficiency and stability.

It should be noted that the steps in the above embodiments and examples are provided for illustrative purposes only and do not limit the scope of the present invention. Various modifications and changes can be made to the steps without departing from the spirit and scope of the present invention.

The order of the described steps (signaling/blocks) is not intended to be construed as a limitation, and any number of the described steps (signaling/blocks) can be skipped or combined in any order to implement the method or an alternative method.

The present disclosure describes examples of communication between a non-collocated/virtual AP MLD and a non-AP MLD in the above embodiments, which are mainly for exemplary purposes and are not limiting.

The order of the described steps (signaling/blocks) is not intended to be interpreted as a limitation, and any number of the described steps (signaling/blocks) can be skipped or combined in any order to implement the method or an alternative method. Generally, any of the components, modules, methods, and operations described herein can be implemented using software, firmware, hardware (e.g., fixed logic circuitry), manual processing, or any combination thereof. Some operations of the exemplary methods may be described in the general context of executable instructions stored on a computer-readable storage medium, locally and/or remotely to a computer processing system, and implementations may include software applications, programs, functions, and the like. Alternatively or additionally, any of the functions described herein can be performed, at least in part, by one or more hardware logic components, such as but not limited to field-programmable gate arrays (FPGAs), application-specific integrated circuits (ASICs), application-specific standard products (ASSPs), systems-on-chip (SoCs), complex programmable logic devices (CPLDs), and the like.

Additionally, the signaling delivery described in the embodiments of the present disclosure can be implemented in any manner known in the art. For example, the signaling can be explicit and/or implicit. Furthermore, the illustrated steps (signaling/blocks) are for exemplary purposes only and are not intended to be limiting.

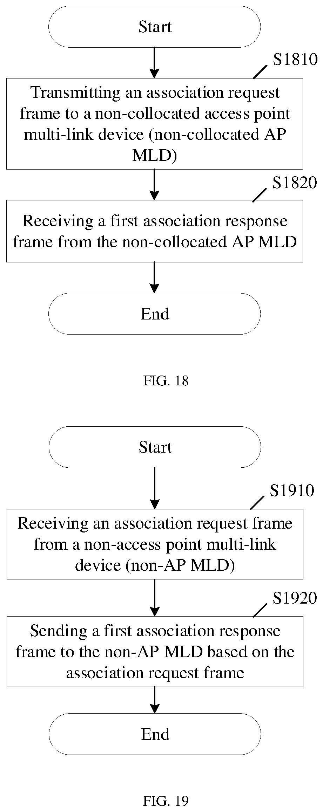

FIG. 18 illustrates a flowchart of a wireless communication method 1800 for a non-access point multi-link device (non-AP MLD), according to some embodiments of the present disclosure.

As shown in FIG. 18, according to some embodiments of the present disclosure, the method 1800 includes step S1810: transmitting an association request frame to a non-collocated access point multi-link device (non-collocated AP MLD). The association request frame can be used to request that at least one access point multi-link device (AP MLD) among a plurality of AP MLDs included in the non-collocated AP MLD associate with the non-AP MLD, thereby associating the non-AP MLD with the non-collocated AP MLD. The method 1800 also includes step S1820: receiving a first association response frame from the non-collocated AP MLD. The first association response frame may be sent by the non-collocated AP MLD based on the association request frame.

FIG. 19 illustrates a flowchart of a wireless communication method 1900 for a non-collocated access point multi-link device (non-collocated AP MLD), according to some embodiments of the present disclosure.

As shown in FIG. 19, according to some embodiments of the present disclosure, the method 1900 includes step S1910: receiving an association request frame from a non-access point multi-link device (non-AP MLD). The association request frame can be used by the non-AP MLD to request that at least one access point multi-link device (AP MLD) among a plurality of AP MLDs included in the non-collocated AP MLD associate with the non-AP MLD, thereby associating the non-AP MLD with the non-collocated AP MLD. The method 1900 also includes step S1920: sending a first association response frame to the non-AP MLD based on the association request frame.

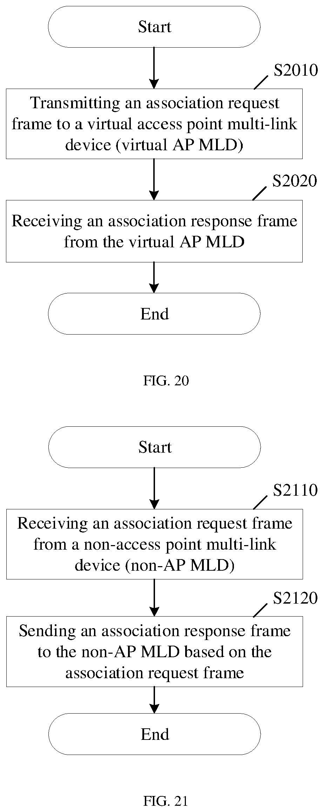

FIG. 20 illustrates a flowchart of a wireless communication method 2000 for a non-access point multi-link device (non-AP MLD), according to some embodiments of the present disclosure.

As shown in FIG. 20, according to some embodiments of the present disclosure, the method 2000 includes step S2010: transmitting an association request frame to a virtual access point multi-link device (virtual AP MLD). The virtual AP MLD can include a plurality of AP MLDs, each AP MLD can include a plurality of access points (APs), and one or more APs operating in the same frequency band among all the APs can be unified by the virtual AP MLD into a single unique affiliated AP. The association request frame can be used by the non-AP MLD to make an association request to the virtual AP MLD, thereby associating the non-AP MLD with the virtual AP MLD. The method 2000 also includes step S2020: receiving an association response frame from the virtual AP MLD. The association response frame may be sent by the virtual AP MLD based on the association request frame.

FIG. 21 illustrates a flowchart of a wireless communication method 2100 for a virtual access point multi-link device (virtual AP MLD), according to some embodiments of the present disclosure.

As shown in FIG. 21, according to some embodiments of the present disclosure, the method 2100 includes step S2110: receiving an association request frame from a non-access point multi-link device (non-AP MLD). The virtual AP MLD can include a plurality of AP MLDs, each AP MLD can include a plurality of access points (APs), and one or more APs operating in the same frequency band among all the APs can be unified by the virtual AP MLD into a single unique affiliated AP. The association request frame can be used by the non-AP MLD to make an association request to the virtual AP MLD, thereby associating the non-AP MLD with the virtual AP MLD. The method 2100 also includes step S2120: sending an association response frame to the non-AP MLD based on the association request frame.

For further extensions of the above methods 1800, 1900, 2000, and 2100, reference can be made to the exemplary embodiments, embodiments, and/or examples described above with respect to FIGs. 1 to 17, and details thereof are not repeated herein.

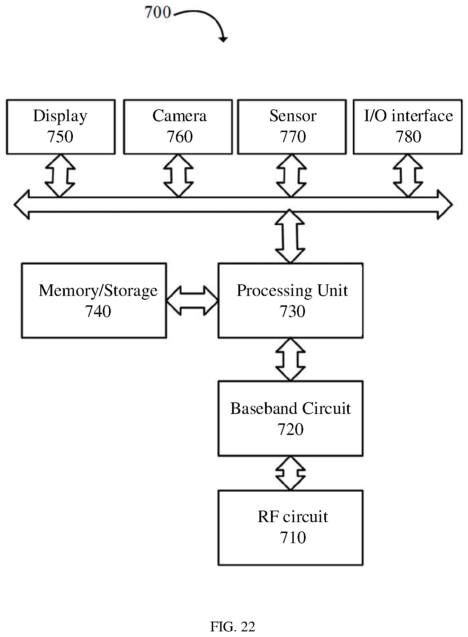

FIG. 22 is a block diagram of an example system 700 for wireless communication according to an embodiment of the present disclosure. The embodiments described herein can be implemented in the system using any suitably configured hardware and/or software. FIG. 22 illustrates the system 700, including a radio frequency (RF) circuit 710, a baseband circuit 720, a processing unit 730, a memory/storage 740, a display 750, a camera 760, a sensor 770, and an input/output (I/O) interface 780, coupled to each other as shown.

The processing unit 730 may include circuitry, such as but not limited to one or more single-core or multicore processors. The processor may include any combination of general-purpose processors and special-purpose processors, such as graphics processors and application processors. The processor may be coupled to the memory/storage and configured to execute instructions stored in the memory/storage to enable various applications and/or operating systems to run on the system. The RF circuit 710, the baseband circuit 720, the processing unit 730, the memory/storage 740, the display 750, the camera 760, the sensor 770, and the I/O interface 780 are well-known components of a system 700, such as, but not limited to, a laptop computing device, a tablet computing device, a netbook, an ultrabook, a smartphone, etc. In addition, instructions in the form of a software product may be stored on a computer-readable storage medium. The software product is stored on the storage medium and includes a plurality of instructions for causing a computing device (such as a personal computer, a server, or a network device) to execute all or some of the steps of the methods disclosed in the embodiments of the present disclosure. The storage medium includes a USB disk, a mobile hard disk, a read-only memory (ROM), a random-access memory (RAM), a floppy disk, or other types of media capable of storing program code.

The embodiments of the present disclosure describe a combination of technologies/processes that can be adopted in 3GPP specifications to create a final product.

Although the present disclosure has been described in conjunction with what are considered to be the most practical and preferred embodiments, it should be understood that the disclosure is not limited to the disclosed embodiments. On the contrary, the disclosure is intended to cover various modifications and equivalent arrangements included within the spirit and scope of the appended claims, the scope of which is to be accorded the broadest interpretation so as to encompass all such modifications and equivalent structures and functions.

## Claims

1. A wireless communication method for a non-access point multi-link device (non-AP MLD), comprising:
transmitting an association request frame to a non-collocated access point multi-link device (non-collocated AP MLD), wherein the association request frame is used for requesting at least one AP MLD of a plurality of AP MLDs comprised in the non-collocated AP MLD to associate with the non-AP MLD, thereby associating the non-AP MLD with the non-collocated AP MLD; and
receiving a first association response frame from the non-collocated AP MLD, wherein the first association response frame is sent by the non-collocated AP MLD based on the association request frame.

2. The method according to claim 1, wherein the non-AP MLD being associated with the non-collocated AP MLD comprises:
the non-AP MLD establishing a multi-link with at least one AP MLD of the plurality of AP MLDs.

3. The method according to claim 2, wherein the association request frame comprises one or more basic multi-link elements, and the one or more basic multi-link elements correspond to one or more AP MLDs in a one-to-one manner;
wherein the non-AP MLD requests, via the association request frame, to establish the multi-link with the one or more AP MLDs, and said basic multi-link element indicates a medium access control (MAC) address of one AP MLD of the one or more AP MLDs.

4. The method according to claim 3, wherein a first sub-element in said basic multi-link element comprises a received signal strength indication (RSSI), wherein the RSSI represents a strength of a signal received by the non-AP MLD on a link operated by one AP MLD of the one or more AP MLDs, and the signal is sent by the one AP MLD to the non-AP MLD.

5. The method according to claim 3, wherein the first association response frame comprises one or more basic multi-link elements, the one or more basic multi-link elements comprised in the first association response frame correspond to the one or more basic multi-link elements comprised in the association request frame in a one-to-one manner, and
wherein a second sub-element of said basic multi-link element comprised in the first association response frame indicates whether a respective AP MLD of the one or more AP MLDs is permitted to establish at least one of the multi-links.

6. The method according to claim 5, wherein the second sub-element is a per-STA profile sub-element.

7. The method according to claim 5, further comprising:
receiving, from the non-collocated AP MLD, a second frame different from the first association response frame, wherein the second frame carries identifiers corresponding to the one or more AP MLDs.

8. The method according to claim 1 or 2, further comprising:
receiving, from the non-collocated AP MLD, a TID-to-Link mapping response frame for a traffic identifier-to-link (TID-to-Link) mapping, wherein the TID-to-Link mapping response frame is sent by the non-collocated AP MLD after receiving a TID-to-Link mapping request frame from the non-AP MLD,
wherein the TID-to-Link mapping request frame comprises a first number of TID-to-Link mapping elements, and the TID-to-Link mapping response frame comprises a second number of TID-to-Link mapping elements, and
wherein less than or equal to two links between the non-AP MLD and one AP MLD comprised in the non-collocated AP MLD correspond to the TID-to-Link mapping elements.

9. The method according to claim 5, wherein the association request frame comprises a first number of TID-to-Link mapping elements for a traffic identifier-to-link (TID-to-Link) mapping, and the first association response frame comprises a second number of the TID-to-Link mapping elements, and
wherein less than or equal to two links between the non-AP MLD and one AP MLD comprised in the non-collocated AP MLD correspond to the TID-to-Link mapping elements.

10. The method according to claim 8 or 9, wherein the second number is the same as or different from the first number.

11. The method according to claim 7, wherein the second frame comprises one or more TID-to-Link mapping elements for traffic identifier-to-link (TID-to-Link) mapping, and
wherein less than or equal to two links between the non-AP MLD and one AP MLD comprised in the non-collocated AP MLD correspond to the TID-to-Link mapping elements.

12. The method according to any one of claims 8 to 11, wherein a TID-to-Link mapping control field of the TID-to-Link mapping element comprises at least one bit for carrying a collocated AP MLD identifier (ID), wherein the collocated AP MLD ID indicates an identifier corresponding to an AP MLD that performs the TID-to-Link mapping with the non-AP MLD, to distinguish between the TID-to-Link mapping elements.

13. The method according to any one of claims 8 to 11, wherein a length of a predefined field of the TID-to-Link mapping element is extended, so that the predefined field is capable of simultaneously indicating a collocated AP MLD identifier (ID) and a link identifier (ID).

14. The method according to any one of claims 1 to 13, further comprising:
receiving a beamforming report poll (BFRP) trigger frame from the non-collocated AP MLD, wherein the BFRP trigger frame instructs the non-AP MLD to transmit a channel state information (CSI) report of a first link to the non-collocated AP MLD via a second link, the first link and the second link are both links established between the non-collocated AP MLD and the non-AP MLD, and the BFRP trigger frame is transmitted on the second link; and
in response to receiving the BFRP trigger frame, transmitting the CSI report to the non-collocated AP MLD via the second link.

15. The method according to claim 14, before the receiving the BFRP trigger frame from the non-collocated AP MLD, further comprising:
receiving a null data packet announcement (NDPA) frame and a null data packet (NDP) frame from the non-collocated AP MLD via the first link.

16. The method according to claim 15, wherein when the first link comprises a plurality of links, the CSI report indicates channel sounding results of the plurality of links.

17. The method according to claim 16, wherein the CSI report comprises one of the following tuples: <MLD MAC address, Link identifier (ID)>, <collocated AP MLD ID, Link ID>, or <transmitter MAC address, receiver MAC address>.

18. The method according to any one of claims 1 to 16, further comprising:
receiving at least one physical layer protocol data unit (PPDU) from the non-collocated AP MLD via at least one link of a multi-link, respectively;
in response to receiving the at least one PPDU, transmitting a block acknowledgment (BA) frame for the at least one PPDU to the non-collocated AP MLD via another link of the multi-link different from the at least one link.

19. The method according to claim 18, wherein a value of a BA Type field of a BA Control field of the BA frame indicates that the BA frame is a multi-link BA frame for acknowledging PPDUs on links of the multi-link other than the another link.

20. The method according to claim 19, wherein a BA Information field of the BA frame comprises one or more BA unit subfields, and the one or more BA unit subfields are used to jointly indicate links in the multi-link that carry the acknowledged PPDUs.

21. The method according to claim 20, wherein the BA unit subfield comprises a Link Identifier (ID) and/or a collocated AP MLD Identifier (ID).

22. The method according to any one of claims 1 to 21, wherein in a case where the non-AP MLD establishes a third link and a fourth link with a first AP MLD and a second AP MLD in the non-collocated AP MLD, respectively, the third link and the fourth link have the same Link Identifier (ID), and the non-AP MLD is a holder of a transmission opportunity (TXOP), the method further comprises:
transmitting a first physical layer protocol data unit (PPDU) to the first AP MLD via the third link at a first time; and
transmitting a second PPDU to the second AP MLD via the fourth link and disconnecting the third link at a second time subsequent to the first time.

23. The method according to any one of claims 1 to 21, wherein in a case where the non-AP MLD establishes a third link and a fourth link with a first AP MLD and a second AP MLD in the non-collocated AP MLD, respectively, the third link and the fourth link have the same Link Identifier (ID), and the first AP MLD is a holder of a transmission opportunity (TXOP), the method further comprises:
transmitting a first physical layer protocol data unit (PPDU) to the first AP MLD via the third link at a first time;
transmitting request information to the first AP MLD, wherein the request information is for requesting a link switch and requesting that the first AP MLD share the TXOP with the non-AP MLD; and
based on the shared TXOP, transmitting a second PPDU to the second AP MLD via the fourth link and disconnecting the third link.

24. The method according to any one of claims 1 to 21, wherein in a case where the non-AP MLD establishes a third link and a fourth link with a first AP MLD and a second AP MLD in the non-collocated AP MLD, respectively, the third link and the fourth link have the same Link Identifier (ID), and the first AP MLD is a holder of a transmission opportunity (TXOP), the method further comprises:
transmitting a first physical layer protocol data unit (PPDU) to the first AP MLD via the third link at a first time;
transmitting request information to the first AP MLD, wherein the request information is for requesting a link switch and indicating the second AP MLD as an AP MLD to switch to; and
receiving a second PPDU transmitted by the second AP MLD based on the shared TXOP via the fourth link and disconnecting the third link.

25. The method according to any one of claims 1 to 24, wherein when the non-AP MLD establishes a non-simultaneous transmission and reception (NSTR) link pair with a plurality of AP MLDs in the non-collocated AP MLD, the method further comprises:
sending, by a plurality of non-access point stations (non-AP STAs) in the non-AP MLD, a non-trigger-based physical layer protocol data unit (non-TB PPDU) to a plurality of access points (APs) that correspond one-to-one with the plurality of non-AP STAs.

26. The method according to claim 25, wherein a medium access control protocol data unit (MPDU) in the non-TB PPDU comprises a Single Response Schedule (SRS) control field.

27. The method according to claim 26, wherein a PPDU Response Duration subfield in the SRS control field indicates a length of a frame fed back by each AP in the at least one AP MLD, and the PPDU Response Duration subfields corresponding to the non-TB PPDUs are set to a same value or are set to values that differ from each other by no larger than a first preset value.

28. The method according to any one of claims 1 to 24, wherein when the non-AP MLD establishes a non-simultaneous transmission and reception (NSTR) link pair with a plurality of AP MLDs in the non-collocated AP MLD, the method further comprises:
when an out-of-sync link exists between the non-AP MLD and the non-collocated AP MLD, transmitting, by a synchronized non-access point station (non-AP STA) in the non-AP MLD, a frame carrying an access point assisted request (AAR) control field to the non-collocated AP MLD through a link corresponding to the non-AP STA, wherein a preset bit in a control information subfield in the AAR control field indicates an identifier of an AP MLD for which the AAR control field requests that a synchronization recovery operation is performed;
receiving a trigger frame sent by an access point (AP) corresponding to the out-of-sync link among the plurality of AP MLDs; and
in response to receiving the trigger frame, transmitting, by a station in the non-AP MLD, a data frame to the AP to complete the synchronization operation.

29. The method according to claim 28, wherein the AAR control field comprises the control information subfield, a first preset bit of the control information subfield indicates at least one AP MLD to perform the synchronization operation, and a second preset bit of the control information subfield indicates a link identifier (ID) of the out-of-sync link corresponding to the at least one AP MLD and/or an access point (AP) within the at least one AP MLD that corresponds to the out-of-sync link.

30. A non-access point multi-link device (non-AP MLD), wherein the non-AP MLD is configured to perform the method according to any one of claims 1 to 29.

31. A wireless communication method for a non-collocated access point multi-link device (non-collocated AP MLD), comprising:
receiving an association request frame from a non-access point multi-link device (non-AP MLD), wherein the association request frame is used for the non-AP MLD to request association with at least one access point multi-link device (AP MLD) of a plurality of AP MLDs comprised in the non-collocated AP MLD, thereby associating the non-AP MLD with the non-collocated AP MLD; and
sending a first association response frame to the non-AP MLD based on the association request frame.

32. The method according to claim 31, wherein the non-AP MLD being associated with the non-collocated AP MLD comprises:
at least one AP MLD of the plurality of AP MLDs establishes a multi-link with the non-AP MLD.

33. The method according to claim 32, wherein the association request frame comprises one or more basic multi-link elements that correspond to one or more of the AP MLDs in a one-to-one manner, the non-AP MLD requests, via the association request frame, to establish the multi-link with the one or more AP MLDs, and said basic multi-link element indicates a medium access control (MAC) address of a respective AP MLD of the one or more AP MLDs.

34. The method according to claim 33, wherein a first sub-element in said basic multi-link element comprises a received signal strength indication (RSSI), the RSSI represents a strength of a signal received by the non-AP MLD on a link operated by one AP MLD of the one or more AP MLDs, and the signal is sent by the one AP MLD to the non-AP MLD.

35. The method according to claim 33, wherein the first association response frame comprises one or more basic multi-link elements, and the one or more basic multi-link elements comprised in the first association response frame correspond to the one or more basic multi-link elements comprised in the association request frame in a one-to-one manner,
wherein a second sub-element of the basic multi-link element comprised in the first association response frame indicates whether a respective AP MLD of the one or more AP MLDs is permitted to establish at least one link of the multi-link.

36. The method according to claim 35, wherein the second sub-element is a per-STA profile sub-element.

37. The method according to claim 35, further comprising:
transmitting, to the non-AP MLD, a second frame different from the first association response frame, wherein the second frame carries identifiers corresponding to the one or more AP MLDs.

38. The method according to claim 31 or 32, further comprising:
transmitting, to the non-AP MLD, a traffic identifier-to-link (TID-to-Link) mapping response frame, wherein the non-collocated AP MLD transmits the TID-to-Link mapping response frame in response to receiving a TID-to-Link mapping request frame from the non-AP MLD,
wherein the TID-to-Link mapping request frame comprises a first number of TID-to-Link mapping elements, and the TID-to-Link mapping response frame comprises a second number of TID-to-Link mapping elements, and
wherein less than or equal to two links between the non-AP MLD and one AP MLD comprised in the non-collocated AP MLD correspond to the TID-to-Link mapping elements.

39. The method according to claim 35, wherein the association request frame comprises a first number of traffic identifier-to-link (TID-to-Link) mapping elements, and the first association response frame comprises a second number of TID-to-Link mapping elements, and
wherein less than or equal to two links between the non-AP MLD and one AP MLD comprised in the non-collocated AP MLD correspond to the TID-to-Link mapping elements.

40. The method according to claim 38 or 39, wherein the second number is the same as or different from the first number.

41. The method according to claim 37, wherein the second frame comprises one or more traffic identifier-to-link (TID-to-Link) mapping elements for traffic identifier-to-link (TID-to-Link) mapping, and
wherein less than or equal to two links between the non-AP MLD and one AP MLD comprised in the non-collocated AP MLD correspond to the TID-to-Link mapping elements.

42. The method according to any one of claims 38 to 41, wherein a TID-to-Link mapping control field of the TID-to-Link mapping element comprises one or more bits for carrying a collocated AP MLD identifier (ID), wherein the collocated AP MLD ID indicates an identifier of an AP MLD that performs the TID-to-Link mapping with the non-AP MLD, to distinguish between the TID-to-Link mapping elements.

43. The method according to any one of claims 38 to 41, wherein a length of a predefined field of the TID-to-Link mapping element is extended, such that the predefined field is capable of simultaneously indicating a collocated AP MLD identifier (ID) and a link identifier (ID).

44. The method according to any one of claims 31 to 43, further comprising:
transmitting a beamforming report poll (BFRP) trigger frame to the non-AP MLD, wherein the BFRP trigger frame instructs the non-AP MLD to transmit a channel state information (CSI) report of a first link to the non-collocated AP MLD via a second link, wherein the first link and the second link are links established by the non-collocated AP MLD and the non-AP MLD, and the BFRP trigger frame is transmitted on the second link; and
in response to transmitting the BFRP trigger frame, receiving the CSI report from the non-AP MLD via the second link.

45. The method according to claim 44, before the transmitting the BFRP trigger frame to the non-AP MLD, further comprising:
transmitting a null data packet announcement (NDPA) frame and a null data packet (NDP) frame to the non-AP MLD via the first link.

46. The method according to claim 45, wherein when the first link comprises a plurality of links, the CSI report indicates channel sounding results of the plurality of links.

47. The method according to claim 46, wherein the CSI report comprises one of the following tuples: <MLD MAC address, Link Identifier (ID)>, <collocated AP MLD ID, Link ID>, or <transmitter MAC address, receiver MAC address>.

48. The method according to any one of claims 31 to 47, further comprising:
transmitting at least one physical layer protocol data unit (PPDU) to the non-AP MLD via at least one link of a multi-link, respectively;
in response to transmitting the at least one PPDU, receiving a block acknowledgement (BA) frame for the at least one PPDU from the non-AP MLD via another link of the multi-link different from the at least one link.

49. The method according to claim 48, wherein a value of a BA type of a BA control field of the BA frame indicates that the BA frame is a multi-link BA frame for acknowledging PPDUs on links of the multi-link other than the another link.

50. The method according to claim 49, wherein a BA information field of the BA frame comprises one or more BA unit subfields, and the one or more BA unit subfields are used to jointly indicate links in the multi-link used for carrying acknowledged PPDUs.

51. The method according to claim 50, wherein the BA unit subfield comprises a Link identifier (ID) and a collocated AP MLD identifier (ID).

52. The method according to any one of claims 31 to 51, wherein in a case where the non-AP MLD establishes a third link and a fourth link with a first AP MLD and a second AP MLD in the non-collocated AP MLD, respectively, the third link and the fourth link have a same Link identifier (ID), and the non-AP MLD is a holder of a transmission opportunity (TXOP), the method further comprises:
receiving, by the first AP MLD, a first physical layer protocol data unit (PPDU) via the third link at a first time point; and
at a second time point subsequent to the first time point, receiving, by the second AP MLD, a second PPDU via the fourth link, and disconnecting the third link.

53. The method according to any one of claims 31 to 51, wherein in a case where the non-AP MLD establishes a third link and a fourth link with a first AP MLD and a second AP MLD in the non-collocated AP MLD, respectively, the third link and the fourth link have a same Link identifier (ID), and the first AP MLD is a holder of a transmission opportunity (TXOP), the method further comprises:
receiving, by the first AP MLD, a first physical layer protocol data unit (PPDU) via the third link at a first time point;
receiving, by the first AP MLD, request information from the non-AP MLD, wherein the request information is used for requesting a link switch and requesting the first AP MLD to share the TXOP with the non-AP MLD; and
after the first AP MLD shares the TXOP with the non-AP MLD, receiving, by the second AP MLD, a second PPDU via the fourth link, and disconnecting the third link.

54. The method according to any one of claims 31 to 51, wherein in a case where the non-AP MLD establishes a third link and a fourth link with a first AP MLD and a second AP MLD in the non-collocated AP MLD, respectively, the third link and the fourth link have a same Link identifier (ID), and the first AP MLD is a holder of a transmission opportunity (TXOP), the method further comprises:
receiving, by the first AP MLD, a first physical layer protocol data unit (PPDU) via the third link at a first time point;
receiving, by the first AP MLD, request information from the non-AP MLD, wherein the request information is used for requesting a link switch and indicating that the second AP MLD is an AP MLD to switch to; and
after the first AP MLD shares the TXOP with the second AP MLD, transmitting, by the second AP MLD, a second PPDU to the non-AP MLD based on the shared TXOP, and disconnecting the third link.

55. The method according to any one of claims 31 to 54, wherein when the non-AP MLD establishes a non-simultaneous transmission and reception (NSTR) link pair with a plurality of AP MLDs in the non-collocated AP MLD, the method further comprises:
performing, by the non-collocated AP MLD, end time alignment of physical layer protocol data units (PPDUs) simultaneously transmitted on a multi-link of the non-AP MLD and the non-collocated AP MLD based on a preset criterion.

56. The method according to claim 55, wherein the preset criterion comprises:
a difference between end times of any two PPDUs among the simultaneously transmitted PPDUs is less than or equal to a second preset value, and/or
an end time of a PPDU carrying a frame that requests an immediate response is earlier than an end time of a PPDU comprising a trigger frame with a value of a carrier sense (CS) requirement subfield set to 1 by at most a third preset value.

57. The method according to claim 55 or 56, wherein in a case where links between the plurality of AP MLDs comprised in the non-collocated AP MLD adopt an ideal backhaul link, the non-collocated AP MLD sends an instruction to at least one AP MLD,
wherein the instruction carries the preset criterion, and further carries at least one of: a start time of PPDU transmission on each link of the multi-link, a length of PPDU on each link of the multi-link, and/or an end time of PPDU transmission on each link of the multi-link.

58. The method according to claim 55 or 56, wherein in a case where links between the plurality of AP MLDs comprised in the non-collocated AP MLD adopt a non-ideal backhaul link, the method further comprises:
transmitting, by an AP of a first AP MLD among the at least one AP MLD, a multi-AP trigger frame to an AP of a second AP MLD among the at least one AP MLD, wherein the multi-AP trigger frame is used to cause the AP of the second AP MLD to maintain synchronous transmission,
wherein the first AP MLD is different from the second AP MLD, the multi-AP trigger frame carries the preset criterion, and further carries at least one of: a start time of PPDU transmission on each link of the multi-link, a length of PPDU on each link of the multi-link, and/or an end time of PPDU transmission on each link of the multi-link.

59. A non-collocated access point multi-link device (non-collocated AP MLD), wherein the non-collocated AP MLD is configured to perform the method according to any one of claims 31 to 58.

60. A wireless communication method for a non-access point multi-link device, non-AP MLD, comprising:
transmitting an association request frame to a virtual access point multi-link device, AP MLD, wherein the virtual AP MLD comprises a plurality of AP MLDs, each of the plurality of AP MLDs comprises a plurality of access points, APs, and one or more APs operating in a same frequency band among all the APs are unified by the virtual AP MLD into a unique affiliated AP, wherein the association request frame is used for the non-AP MLD to make an association request to the virtual AP MLD, thereby associating the non-AP MLD with the virtual AP MLD; and
receiving an association response frame from the virtual AP MLD, wherein the association response frame is sent by the virtual AP MLD based on the association request frame.

61. The method according to claim 60, wherein the non-AP MLD being associated with the virtual AP MLD comprises:
establishing, by the non-AP MLD, a multi-link with the virtual AP MLD.

62. The method according to claim 61, wherein the association request frame comprises only one basic multi-link element, and a link information field in the basic multi-link element indicates information of at least one of the unique affiliated APs corresponding to the multi-link.

63. The method according to claim 61 or 62, wherein the association response frame indicates whether to accept the association request of the non-AP MLD and/or whether to permit establishing the multi-link with the non-AP MLD.

64. The method according to claim 61 or 62, further comprising:
receiving, from the virtual AP MLD, a traffic identifier-to-link, TID-to-Link, mapping response frame for a TID-to-Link mapping, wherein the TID-to-Link mapping response frame is transmitted by the virtual AP MLD in response to receiving a TID-to-Link mapping request frame from the non-AP MLD,
wherein the TID-to-Link mapping request frame comprises a first number of TID-to-Link mapping elements, and the TID-to-Link mapping response frame comprises a second number of TID-to-Link mapping elements.

65. The method according to claim 63, wherein the association request frame comprises a first number of traffic identifier-to-link, TID-to-Link, mapping elements for a TID-to-Link mapping, and the association response frame comprises a second number of the TID-to-Link mapping elements.

66. The method according to claim 64 or 65, wherein the second number is the same as or different from the first number.

67. The method according to claim 63, further comprising:
receiving, from the virtual AP MLD, a second frame different from the association response frame, wherein the second frame comprises a traffic identifier-to-link, TID-to-Link, mapping element for TID-to-Link mapping.

68. The method according to any one of claims 60 to 67, further comprising:
receiving a null data packet announcement, NDPA, frame and a null data packet, NDP, frame from the virtual AP MLD; and
in response to receiving the NDPA frame and the NDP frame, transmitting a channel state information, CSI, report for the link to the virtual AP MLD via the same link on which the NDPA frame and the NDP frame are received.

69. The method according to claim 68, further comprising:
receiving a third frame carrying a modulation and coding scheme (MCS) from the virtual AP MLD, wherein the MCS is obtained based on the CSI report; and
transmitting a data frame to the virtual AP MLD on the link based on the MCS.

70. The method according to any one of claims 60 to 69,
wherein for a frame transmitted by the non-AP MLD to the virtual AP MLD, a receiver address of the frame is a medium access control, MAC, address of an affiliated AP of the virtual AP MLD, and a sender address of the frame is a MAC address of a non-access point station, non-AP STA, of the non-AP MLD.

71. The method according to any one of claims 60 to 70, wherein when operating frequency bands of a first AP and a second AP in the virtual AP MLD are the same:
transmitting a first physical layer protocol data unit (PPDU) to the first AP via a link at a first time point; and
transmitting a second PPDU to the second AP via the link at a second time point, wherein the second time point is later than the first time point.

72. The method according to any one of claims 60 to 71, wherein before the non-AP MLD transmits the association request frame to the virtual AP MLD, the method further comprises:
receiving a frame carrying a basic multi-link element from the virtual AP MLD,
wherein the basic multi-link element comprises a multi-link control field, and the multi-link control field indicates whether an AP MLD corresponding to the basic multi-link element is an 802.11be-compliant AP MLD or a virtual AP MLD.

73. The method according to claim 72,
wherein when a value of a preset bit of the multi-link control field is a fourth preset value, the AP MLD corresponding to the basic multi-link element is an 802.11be-compliant AP MLD, and
wherein when the value of the preset bit of the multi-link control field is a fifth preset value, the AP MLD corresponding to the basic multi-link element is a virtual AP MLD.

74. The method according to any one of claims 60 to 71, wherein before the non-AP MLD transmits the association request frame to the virtual AP MLD, the method further comprises:
transmitting a multi-link (ML) probe request frame carrying a probe request multi-link element to the virtual AP MLD; and
receiving an ML probe response frame from the virtual AP MLD, wherein the ML probe response frame is transmitted by the virtual AP MLD in response to the ML probe request frame,
wherein the ML probe response frame carries a basic multi-link element, the basic multi-link element comprises a multi-link control field, and the multi-link control field indicates whether an AP MLD corresponding to the basic multi-link element is an 802.11be-compliant AP MLD or a virtual AP MLD.

75. The method according to claim 74,
wherein when a value of a preset bit of the multi-link control field is a sixth preset value, the AP MLD corresponding to the basic multi-link element is an 802.11be-compliant AP MLD, and
wherein when the value of the preset bit of the multi-link control field is a seventh preset value, the AP MLD corresponding to the basic multi-link element is a virtual AP MLD.

76. A non-access point multi-link device (non-AP MLD), wherein the non-AP MLD is configured to perform the method according to any one of claims 60 to 75.

77. A wireless communication method for a virtual access point multi-link device, AP MLD, comprising:
receiving an association request frame from a non-access point multi-link device, non-AP MLD, wherein the virtual AP MLD comprises a plurality of AP MLDs, each of the plurality of AP MLDs comprises a plurality of access points, APs, and one or more APs operating in a same frequency band among all the APs are unified by the virtual AP MLD into a unique affiliated AP, wherein the association request frame is used for the non-AP MLD to make an association request to the virtual AP MLD, thereby associating the non-AP MLD with the virtual AP MLD; and
sending an association response frame to the non-AP MLD based on the association request frame.

78. The method according to claim 77, wherein the non-AP MLD being associated with the virtual AP MLD comprises:
the non-AP MLD establishing a multi-link with the virtual AP MLD.

79. The method according to claim 78, wherein the association request frame comprises only one basic multi-link element, and a link information field in the basic multi-link element is used to indicate information of at least one of the unique affiliated APs corresponding to the multi-link.

80. The method according to claim 77 or 78, wherein the association response frame indicates whether to accept the association request of the non-AP MLD and/or whether to permit establishing the multi-link with the non-AP MLD.

81. The method according to claim 77 or 78, further comprising:
transmitting, to the non-AP MLD, a TID-to-Link mapping response frame for a traffic identifier-to-link (TID-to-Link) mapping, wherein the TID-to-Link mapping response frame is transmitted by the virtual AP MLD in response to receiving a TID-to-Link mapping request frame of the non-AP MLD,
wherein the TID-to-Link mapping request frame comprises a first number of TID-to-Link mapping elements, and the TID-to-Link mapping response frame comprises a second number of the TID-to-Link mapping elements.

82. The method according to claim 80, wherein the association request frame comprises a first number of TID-to-Link mapping elements for a traffic identifier-to-link (TID-to-Link) mapping, and the association response frame comprises a second number of the TID-to-Link mapping elements.

83. The method according to claim 81 or 82, wherein the second number is the same as or different from the first number.

84. The method according to claim 80, further comprising:
transmitting, to the non-AP MLD, a second frame different from the association response frame, wherein the second frame comprises a TID-to-Link mapping element for traffic identifier-to-link (TID-to-Link) mapping.

85. The method according to any one of claims 77 to 84, further comprising:
transmitting a null data packet announcement (NDPA) frame and a null data packet (NDP) frame to the non-AP MLD; and
receiving a channel state information (CSI) report for a link from the non-AP MLD via the link on which the NDPA frame and the NDP frame are transmitted.

86. The method according to claim 85, further comprising:
transmitting a third frame carrying a modulation and coding scheme (MCS) to the non-AP MLD, wherein the MCS is obtained based on the CSI report; and
receiving a data frame of the non-AP MLD via the link, wherein the data frame is configured by the non-AP MLD based on the MCS.

87. The method according to any one of claims 77 to 86,
wherein for a frame transmitted by the virtual AP MLD to the non-AP MLD, a receiver address of the frame is a medium access control (MAC) address of a non-access point station (non-AP STA) of the non-AP MLD, and a transmitter address of the frame is a MAC address of an affiliated AP of the virtual AP MLD.

88. The method according to any one of claims 77 to 87, wherein when operating frequency bands of a first AP MLD and a second AP MLD of the virtual AP MLD are the same:
transmitting a first physical layer protocol data unit (PPDU) to the non-AP MLD via a link at a first time point; and
transmitting a second PPDU to the non-AP MLD via the link at a second time point, wherein the second time point is later than the first time point.

89. The method according to any one of claims 77 to 88, wherein before the virtual AP MLD receives the association request frame from the non-AP MLD, the method further comprises:
transmitting a frame carrying a basic multi-link element to the non-AP MLD,
wherein the basic multi-link element comprises a multi-link control field, and the multi-link control field indicates whether an AP MLD corresponding to the basic multi-link element is an 802.11be-compliant AP MLD or a virtual AP MLD.

90. The method according to claim 89,
wherein when a value of a preset bit of the multi-link control field is a fourth preset value, the AP MLD corresponding to the basic multi-link element is an 802.11be-compliant AP MLD, and
wherein when the value of the preset bit of the multi-link control field is a fifth preset value, the AP MLD corresponding to the basic multi-link element is a virtual AP MLD.

91. The method according to any one of claims 77 to 88, wherein before the virtual AP MLD receives the association request frame from the non-AP MLD, the method further comprises:
receiving a multi-link (ML) probe request frame carrying a probe request multi-link element from the non-AP MLD; and
transmitting an ML probe response frame to the non-AP MLD, wherein the ML probe response frame is transmitted by the virtual AP MLD in response to the ML probe request frame,
wherein the ML probe response frame carries a basic multi-link element, the basic multi-link element comprises a multi-link control field, and the multi-link control field indicates whether an AP MLD corresponding to the basic multi-link element is an 802.11be-compliant AP MLD or a virtual AP MLD.

92. The method according to claim 91,
wherein when a value of a preset bit of the multi-link control field is a sixth preset value, the AP MLD corresponding to the basic multi-link element is an 802.11be-compliant AP MLD, and
wherein when the value of the preset bit of the multi-link control field is a seventh preset value, the AP MLD corresponding to the basic multi-link element is a virtual AP MLD.

93. A virtual access point multi-link device (virtual AP MLD), wherein the virtual AP MLD is configured to perform the method according to any one of claims 77 to 92.

94. A chip, the chip comprising: a processor, configured to call and run a computer program from a memory, to cause a device in which the chip is installed to perform the method according to any one of claims 1 to 29.

95. A computer-readable storage medium, configured to store a computer program, wherein the computer program causes a computer to perform the method according to any one of claims 1 to 29.

96. A chip, the chip comprising: a processor, configured to call and run a computer program from a memory, to cause a device in which the chip is installed to perform the method according to any one of claims 31 to 58.

97. A computer-readable storage medium, configured to store a computer program, wherein the computer program causes a computer to perform the method according to any one of claims 31 to 58.

98. A chip, the chip comprising: a processor, configured to call and run a computer program from a memory, to cause a device in which the chip is installed to perform the method according to any one of claims 60 to 75.

99. A computer-readable storage medium, configured to store a computer program, wherein the computer program causes a computer to perform the method according to any one of claims 60 to 75.

100. A chip, the chip comprising: a processor, configured to call and run a computer program from a memory, to cause a device in which the chip is installed to perform the method according to any one of claims 77 to 92.

101. A computer-readable storage medium, configured to store a computer program, wherein the computer program causes a computer to perform the method according to any one of claims 77 to 92.
